# EUROPÄISCHE PATENTSCHRIFT

(11) **EP 2 723 779 B1**
(45) Veröffentlichungstag und Bekanntmachung des Hinweises auf die Patenterteilung: **14.01.2015**
(21) Anmeldenummer: 12719284.7
(22) Anmeldetag: 04.05.2012
(51) Int. Cl.: C08F 8/32

(54) **OBERFLÄCHENAKTIVE KAMMCOPOLYMERE**
SURFACE-ACTIVE COMB COPOLYMERS
COPOLYMÈRES EN PEIGNES TENSIOACTIFS

(30) Priorität: 22.06.2011 EP 11005094
(43) Veröffentlichungstag der Anmeldung: 30.04.2014
(73) Patentinhaber: BYK-Chemie GmbH, 46483 Wesel (DE)
(72) Erfinder: NAGELSDIEK, René, 46499 Hamminkeln (DE); GÖBELT, Bernd, 46487 Wesel (DE); GREEFRATH, Dorothée, 45481 Mülheim an der Ruhr (DE); GERTZEN, Bärbel, 46446 Emmerich (DE); OMEIS, Jürgen, 46286 Dorsten-Lembeck (DE)
(86) Internationale Anmeldenummer: PCT/EP2012/001931
(87) Internationale Veröffentlichungsnummer: WO 2012/175158

(56) Entgegenhaltungen:
- EP-A1- 0 945 473
- WO-A2-2005/103093

## Beschreibung

Die vorliegende Erfindung betrifft ein Copolymer, die Herstellung des Copolymers, eine Komposition, eine Dispersion sowie die Verwendung des Copolymers.

Kammcopolymere, welche Gruppen bzw. Polymerkettensegmente mit unterschiedlichen Funktionalitäten bzw. Polaritäten aufweisen, werden in der Praxis unter anderem als Netz- und Dispergiermittel sowie als Emulgatoren eingesetzt. Häufig ist die Verwendung derartiger Kammcopolymere entweder je nach strukturellem Aufbau auf spezielle wässrige Systeme oder alternativ auf unpolare, lösungsmittelhaltige Systeme begrenzt. Häufig werden Kammcopolymere auf Basis von Styrol/Maleinsäureanhydrid-Harzen (SMA-Harzen) eingesetzt.

In der US-B-7,078,464 sowie in der US-A-6,211,299 sind derartige auf SMA-Harze basierende Kammcopolymere beschrieben, welche insbesondere Polyetherseitenketten aufweisen und daher als oberflächenaktive Additive eingesetzt werden können. Besagte Additive haben im Allgemeinen jedoch den Nachteil, dass diese insbesondere aufgrund der enthaltenden Polyetherseitenketten lediglich in vergleichsweise polaren Medien als oberflächenaktive Additive sowie ggf. als Entlüfter-Additiv sinnvoll einsetzbar sind.

Die der vorliegenden Erfindung zugrunde liegende Aufgabe ist es, ein qualitativ hochwertiges oberflächenaktives Additiv bereit zu stellen, welches insbesondere auch in Verbindung mit unpolaren Medien als Netz- und Dispergiermittel sowie als Phasenvermittler erfolgreich einsetzbar ist.

Die Lösung dieser Aufgabe ist ein Copolymer, dessen Gesamtstruktur als solches und/ oder ein optional vorhandenes, mindestens 10 bivalente Struktureinheiten aufweisendes Segment A der Gesamtstruktur, an bivalenten Struktureinheiten jeweils enthalten
i) 40-90 Mol-% einer Basisstruktureinheit (I),
ii) 10-60 Mol-% einer unpolaren Dicarbonsäurederivatstruktureinheit (II),
iii) 0-50 Mol-% einer polaren Dicarbonsäurederivatstruktureinheit (III),
iv) 0-50 Mol-% einer Sauerstoffgruppenstruktureinheit (IV) sowie
v) 0-40 Mol-% einer Kopfgruppenstruktureinheit (V),
   wobei die Basisstruktureinheit (I) durch Umsetzung eines eine olefinische Doppelbindung enthaltenden Monomers (Ix) erzeugt wird sowie keine unter einer der Struktureinheiten (II) bis (V) fallende Spezies umfasst,
   die unpolare Dicarbonsäurederivatstruktureinheit (II) vorliegt gemäß einer oder mehrerer der allgemeinen Formeln aus der Gruppe bestehend aus (IIa), (IIb), (IIc) sowie (IId) 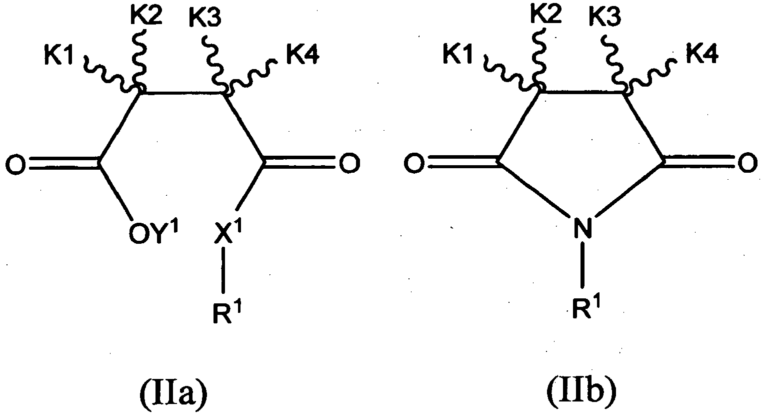 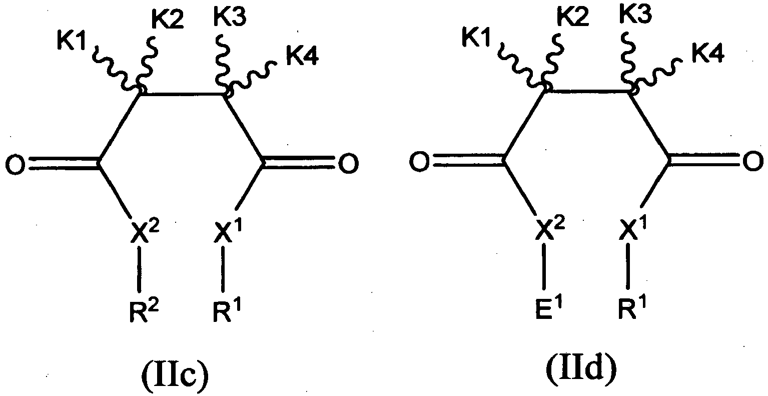
mit
K1, K2, K3 und K4 jeweils gleich oder verschieden sowie jeweils repräsentiert durch Konnektivitätsmöglichkeiten in der Polymerkette, mit der Maßgabe, dass pro allgemeiner Formel genau zwei der Konnektivitätsmöglichkeiten verwirklicht sind,
X¹ und X² jeweils gleich oder verschieden sowie jeweils unabhängig voneinander repräsentiert durch NR^{x} und/oder O
mit R^{x} gleich oder verschieden sowie repräsentiert durch H und/oder einen verzweigten oder unverzweigten C₁-C₁₂-Alkylrest,
Y¹ gleich oder verschieden sowie repräsentiert durch H, einen verzweigten oder unverzweigten C₁-C₂₄-Alkylrest, einen C₆-C₁₈-Arylrest und/oder einen verzweigten oder unverzweigten C₆-C₁₈-Arylalkylrest,
R¹ und R² jeweils gleich oder verschieden sowie jeweils unabhängig voneinander repräsentiert durch einen verzweigten oder unverzweigten, mindestens 50 Kohlenstoffatome aufweisenden gesättigten oder ungesättigten Kohlenwasserstoffrest,
E¹ gleich oder verschieden sowie repräsentiert durch einen verzweigten oder unverzweigten organischen Rest, der insgesamt mindestens vier funktionelle Gruppen enthält, welche in Form von Ethergruppen und/oder Estergruppen vorliegen,
die polare Dicarbonsäurederivatstruktureinheit (III) vorliegt gemäß einer oder mehrerer der allgemeinen Formeln aus der Gruppe bestehend aus (IIIa) sowie (IIIb) 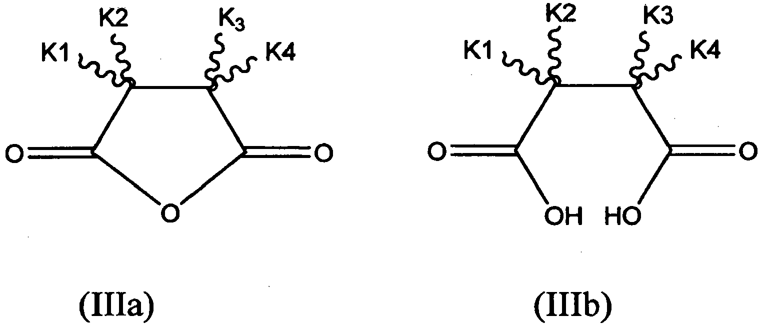 mit
K1, K2, K3 und K4 jeweils gleich oder verschieden sowie jeweils repräsentiert durch Konnektivitätsmöglichkeiten in der Polymerkette, mit der Maßgabe, dass pro allgemeiner Formel genau zwei der Konnektivitätsmöglichkeiten verwirklicht sind,
die Sauerstoffgruppenstruktureinheit (IV) keine unter die Dicarbonsäurederivatstruktureinheit (II) fallende Spezies umfasst und vorliegt gemäß einer oder mehrerer der allgemeinen Formeln aus der Gruppe bestehend aus (IVa), (IVb), (IVc) sowie (IVd) 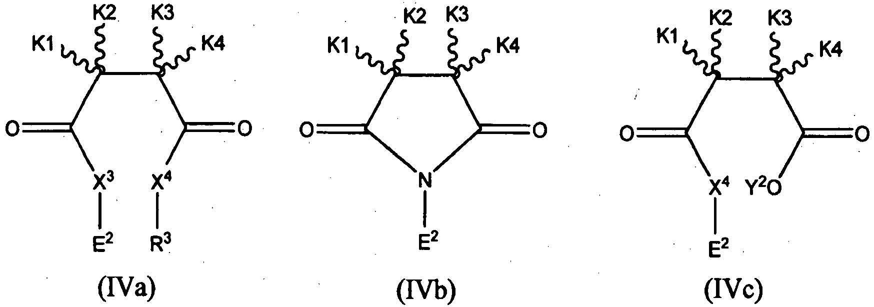 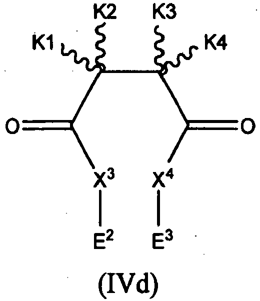 mit
K1, K2, K3 und K4 jeweils gleich oder verschieden sowie jeweils repräsentiert durch Konnektivitätsmöglichkeiten in der Polymerkette, mit der Maßgabe, dass pro allgemeiner Formel genau zwei der Konnektivitätsmöglichkeiten verwirklicht sind,
X³ und X⁴ jeweils gleich oder verschieden sowie jeweils unabhängig voneinander repräsentiert durch NR^{y} und/oder O
mit R^{y} gleich oder verschieden sowie repräsentiert durch H und/oder einen verzweigten oder unverzweigten C₁-C₁₂-Alkylrest,
Y² gleich oder verschieden sowie repräsentiert durch H, einen verzweigten oder unverzweigten C₁-C₂₄-Alkylrest, einen C₆-C₁₈-Arylrest und/oder einen verzweigten oder unverzweigten C₆-C₁₈-Arylalkylrest,
R³ gleich oder verschieden sowie repräsentiert durch eine substituierte (als Substituenten kommen in Frage: OH, aliphatische oder aromatische tertiäre Amine, ggf. heterocyclische Alkoxygruppen, Alkoxysilylgruppen, Alkinylgruppen; bevorzugt OH, tertiäre aliphatische oder aromatische Amine) oder nicht substituierte verzweigte oder unverzweigte C₁-C₄₀-Alkylgruppe, durch eine substituierte (als Substituenten kommen in Frage: OH, aliphatische oder aromatische tertiäre Amine, ggf. heterocyclische Alkoxygruppen, Alkoxysilylgruppen, Alkinylgruppen; bevorzugt OH, tertiäre aliphatische oder aromatische Amine) oder nicht substituierte verzweigte oder unverzweigte C₁-C₄₀ -Alkenylgruppe; durch eine substituierte (als Substituenten kommen in Frage: OH, aliphatische oder aromatische tertiäre Amine, ggf. heterocyclische Alkoxygruppen, Alkoxysilylgruppen, Alkinylgruppen; bevorzugt OH, tertiäre aliphatische oder aromatische Amine) oder nicht substituierte C₆-C₁₈-Arylgruppe, eine substituierte (als Substituenten kommen in Frage: OH, aliphatische oder aromatische tertiäre Amine, ggf. heterocyclische Alkoxygruppen, Alkoxysilylgruppen, Alkinylgruppen; bevorzugt OH, tertiäre aliphatische oder aromatische Amine) oder nicht substituierte verzweigte oder unverzweigte C₇-C₁₈ -Arylalkylgruppe und/oder eine substituierte (als Substituenten kommen in Frage: OH, aliphatische oder aromatische tertiäre Amine, ggf. heterocyclische Alkoxygruppen, Alkoxysilylgruppen, Alkinylgruppen; bevorzugt OH, tertiäre aliphatische oder aromatische Amine) oder nicht substituierte C₄-C₁₀-Cycloalkylgruppe,
E² gleich oder verschieden sowie repräsentiert durch einen verzweigten oder unverzweigten organischen Rest, der insgesamt mindestens vier funktionelle Gruppen enthält, welche in Form von Ethergruppen und/oder Estergruppen vorliegen,
E³ gleich oder verschieden sowie repräsentiert durch einen verzweigten oder unverzweigten organischen Rest, der insgesamt mindestens vier funktionelle Gruppen enthält, welche in Form von Ethergruppen und/oder Estergruppen vorliegen,
und die Kopfgruppenstruktureinheit (V) keine unter einer der Struktureinheiten (II) und (IV) fallende Spezies umfasst und vorliegt gemäß einer oder mehrerer der allgemeinen Formeln aus der Gruppe bestehend aus (Va), (Vb), (Vc) sowie (Vd) 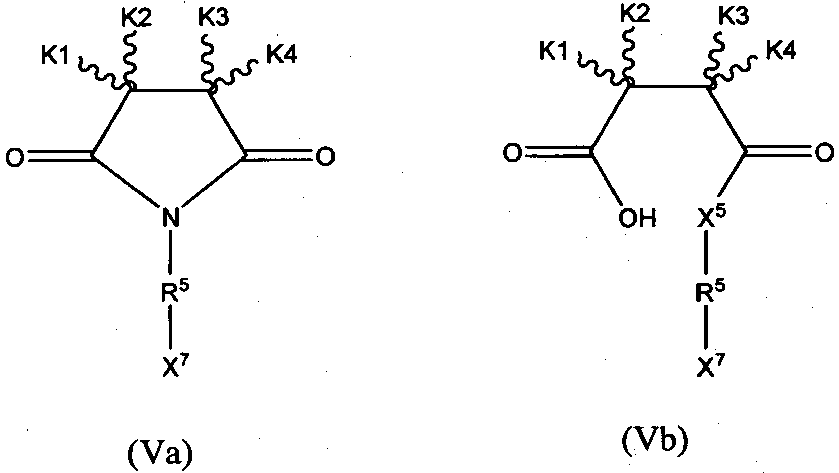 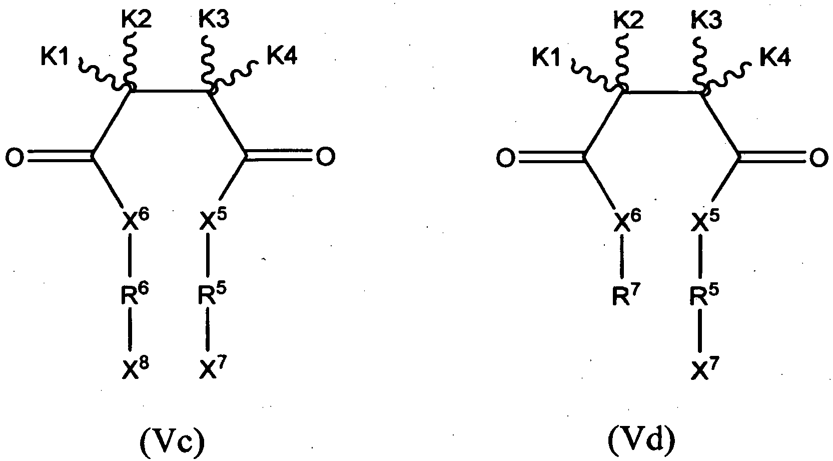 mit
K1, K2, K3 und K4 jeweils gleich oder verschieden sowie jeweils repräsentiert durch Konnektivitätsmöglichkeiten in der Polymerkette, mit der Maßgabe, dass pro allgemeiner Formel genau zwei der Konnektivitätsmöglichkeiten verwirklicht sind,
X⁵ und X⁶ jeweils gleich oder verschieden sowie jeweils unabhängig voneinander repräsentiert durch NR^{z} und/oder O
mit R^{z} gleich oder verschieden sowie repräsentiert durch H und/oder einen verzweigten oder unverzweigten C₁-C₁₂-Alkylrest,
X⁷ und X⁸ jeweils gleich oder verschieden sowie jeweils unabhängig voneinander repräsentiert durch eine Phosphorsäureestergruppe (bevorzugt Monophosphorsäureester), eine Phosphonsäureestergruppe, eine N,N-disubstituierte Aminogruppe der allgemeinen Formel (VA) 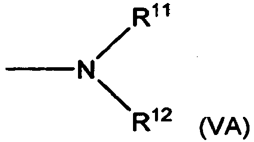 und/oder eine quartäre Ammoniumgruppe der allgemeinen Formel (VB) 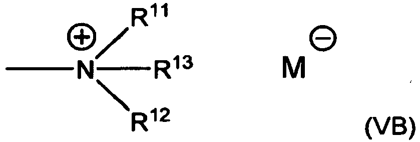 mit R¹¹, R¹² und R¹³ jeweils gleich oder verschieden sowie jeweils unabhängig voneinander repräsentiert durch eine substituierte (als Substituenten kommen insbesondere in Frage OH, Alkoxy, Aryloxy) oder nicht substituierte verzweigte oder unverzweigte C₁-C₂₄ -Alkylgruppe, durch eine substituierte (als Substituenten kommen insbesondere in Frage OH, Alkoxy, Aryloxy) oder nicht substituierte C₄-C₁₀ - Cycolalkylgruppe, durch eine substituierte (als Substituenten kommen insbesondere in Frage OH, Alkoxy, Aryloxy) oder nicht substituierte C₆-C₁₈ -Arylgruppe und/ oder eine substituierte (als Substituenten kommen insbesondere in Frage OH, Alkoxy, Aryloxy) oder nicht substituierte verzweigte oder unverzweigte C₇-C₁₈ -Arylalkylgruppe (R¹¹, R¹² und R¹³ besonders bevorzugt jeweils repräsentiert durch Methyl-, Ethyl-, und/ oder Benzyl-), wobei R¹¹ und R¹² gemeinsam miteinander eine substituierte (als Substituenten kommen insbesondere in Frage OH, Alkoxy, Aryloxy) oder nicht substituierte C₄-C₁₀ - Cycloalkylgruppe ausbilden können,
und M⁻ gleich oder verschieden sowie repräsentiert durch ein Carboxylat (bevorzugt ein Carboxylat einer aliphatischen oder aromatischen Monocarbonsäure, ganz besonders bevorzugt ein Carboxylat einer aromatischen Monocarbonsäure), Phosphat, einen Phosphatester (bevorzugt ein Monophosphat), Sulfat und/oder ein Halogenid (bevorzugt Chlorid, Bromid und/oder Iodid)
R⁵ und R⁶ jeweils gleich oder verschieden sowie jeweils unabhängig voneinander repräsentiert durch eine substituierte (als Substituenten kommen in Frage: OH, Alkoxy und/oder Phenoxy; bevorzugt Substituenten sind Alkoxy und Phenoxy) oder nicht substituierte verzweigte oder unverzweigte C₁-C₂₄ - Alkylengruppe und/ oder eine substituierte (als Substituenten kommen in Frage: OH, Alkoxy und/oder Phenoxy; bevorzugt Substituenten sind Alkoxy und Phenoxy) oder nicht substituierte C₆-C₁₈-Arylengruppe,
R⁷ gleich oder verschieden sowie repräsentiert durch eine substituierte (als Substituenten kommen in Frage: OH, tertiäre aliphatische oder aromatische Aminogruppen, heterocyclische Alkoxygruppen, Alkoxysilylgruppen, Alkinylgruppen; bevorzugt OH, aliphatische oder aromatische tertiäre Aminogruppen) oder nicht substituierte verzweigte oder unverzweigte C₁-C₄₀-Alkylgruppe, durch eine substituierte (als Substituenten kommen in Frage: OH, aliphatische oder aromatische tertiäre Aminogruppen, heterocyclische Alkoxygruppen, Alkoxysilylgruppen, Alkinylgruppen; bevorzugt OH, tertiäre aliphatische oder aromatische Aminogruppen) oder nicht substituierte verzweigte oder unverzweigte C₁-C₄₀ -Alkenylgruppe; durch eine substituierte (als Substituenten kommen in Frage: OH, aliphatische oder aromatische tertiäre Aminogruppen, heterocyclische Alkoxygruppen, Alkoxysilylgruppen, Alkinylgruppen; bevorzugt OH, tertiäre aliphatische oder aromatische Aminogruppen) oder nicht substituierte C₆-C₁₈ -Arylgruppe, eine substituierte (als Substituenten kommen in Frage: OH, tertiäre aliphatische oder aromatische Aminogruppen, heterocyclische Alkoxygruppen, Alkoxysilylgruppen, Alkinylgruppen; bevorzugt OH, aliphatische oder aromatische tertiäre Aminogruppen) oder nicht substituierte verzweigte oder unverzweigte C₇-C₁₈ -Arylalkylgruppe und/oder eine substituierte (als Substituenten kommen in Frage: OH, tertiäre aliphatische oder aromatische Aminogruppen, heterocyclische Alkoxygruppen, Alkoxysilylgruppen, Alkinylgruppen; bevorzugt OH, aliphatische oder aromatische tertiäre Aminogruppen) oder nicht substituierte C₄-C₁₀-Cycloalkylgruppe.

Das erfindungsgemäße Copolymer kann je nach dessen Umgebung vollständig oder teilweise versalzt vorliegen, beispielsweise durch Deprotonierung von Säuregruppen der Struktureinheiten II, III, IV und/ oder V oder durch eine Protonierung von Aminogruppen der Struktureinheiten IV und / oder V.

Mit der Aussage "K1, K2, K3 und K4 jeweils gleich oder verschieden sowie jeweils repräsentiert durch Konnektivitätsmöglichkeiten in der Polymerkette, mit der Maßgabe, dass pro allgemeiner Formel genau zwei der Konnektivitätsmöglichkeiten verwirklicht sind" wird zum Ausdruck gebracht, dass die Spezies der bivalenten Struktureinheiten (II) bis (V) jeweils grundsätzlich entweder auf Basis von Maleinsäurederivaten oder auf Basis von Itakonsäurederivaten vorliegen. Im Falle eines einpolymerisierten Maleinsäurederivats sind entweder K1 oder K2 und entweder K3 oder K4 als Konnektivitäten (Verknüpfungen in der Kette) vorhanden. Dies entspricht einer bevorzugten Ausführungsform der Erfindung und ist in der Regel bei allen Struktureinheiten (II) bis (V) verwirklicht. Im Falle eines einpolymerisierten Itakonsäurederivats sind hingegen entweder K1 und K2 oder alternativ K3 und K4 als Konnektivitäten vorhanden. Grundsätzlich besteht auch die Möglichkeit, dass das erfindungsgemäße Copolymer sowohl entsprechende Maleinsäurederivate als auch entsprechende Itakonsäurederivate aufweist.

Das erfindungsgemäße Copolymer weist eine besonders hohe Grenzflächenaktivität auf und ist auch in Verbindung mit unpolaren Medien als oberflächenaktives Additiv erfolgreich einsetzbar. Speziell eignet sich das erfindungsgemäß Copolymer als Netz- und Dispergiermittel, insbesondere für feste Partikel wie Pigmente und Füllstoffe (Grenzfläche flüssig-fest). Weiterhin kann das erfindungsgemäße Copolymer in vorzüglicher Weise als Phasenvermittler für miteinander unverträgliche Flüssigkeiten (Grenzfläche flüssig-flüssig) eingesetzt werden. Eine weitere Anwendung ist die Verwendung als Entschäumer bzw. Entlüfter (Grenzfläche flüssiggasförmig).

Die universelle Einsetzbarkeit (Phasenvermittler sowie Netz- und Dispergiermittel) als auch die spezielle Eignung für besondere Anwendungsprofile wird maßgeblich durch die im erfindungsgemäßen Copolymer enthaltenen bivalenten Struktureinheiten bestimmt.

Die unpolare Dicarbonsäurestruktureinheit (II) bewirkt aufgrund des enthaltenen langen Kohlenwasserstoffrests eine Affinität zu unpolaren Medien und ist als ein inerter Molekülbestandteil anzusehen, der umweltverträglichkeitsfördernd und qualitätsfördernd ist.

Durch die Basisstruktureinheit (I) werden die langen Seitenketten (z.B. der Dicarbonsäurederivatstruktureinheit (II)) "auf Abstand gehalten" (je nach Pfropfungsdichte/Pfropfungsumsatz) sowie außerdem je nach Auswahl des die Basisstruktureinheit (I) erzeugenden, eine olefinische Doppelbindung enthaltenden Monomers (Ix), die Polarität bzw. Affinität des erfindungsgemäßen Copolymers gezielt beeinflusst.

Die (optional vorliegende) polare Dicarbonsäurestruktureinheit (III) weist in ihrer hydrolisierten Form Säuregruppen auf, welche eine Affinität zu basischen Oberflächen (z.B. basische Pigmente) bereitstellen. Der Struktureinheit Typ (III) wird bei der Herstellung des erfindungsgemäßen Copolymers (durch Polymerisation und anschließender Pfropfung - siehe nachstehend) insbesondere dann erzeugt, wenn eine entsprechend geringe Pfropfungsdichte bzw. ein geringer Pfropfungsumsatz vorliegt.

Die (optional vorliegende) Sauerstoffgruppenstruktureinheit (IV) vermittelt dem erfindungsgemäßen Copolymer auch eine größere Affinität zu polaren Medien. Dies ist insbesondere dann der Fall, wenn die Struktureinheit (IV) Etherreste, insbesondere Ethylenoxidreste und/oder Propylenoxidreste, enthält. Derartige Etherreste sind weiterhin als verhältnismäßig inerte, insbesondere hydrolysestabile Molekülbestandteile anzusehen, welche in der Regel als qualitätssteigernd anzusehen sind.

Die (optional vorliegende) Kopfgruppenstruktureinheit (V) ist als ein salzbildender Molekülbestandteil anzusehen, der bevorzugt mit sauren oder basischen Oberflächen wechselwirken kann und beispielsweise eine Haftgruppenfunktion übernehmen kann.

Grundsätzlich kann durch geeignete Auswahl der bivalenten Struktureinheiten (I) bis (V) die jeweils gewünschte Eigenschaft als Netz- und Dispergiermittel sowie als Phasenvermittler bereitgestellt werden. Wenn auch nicht bevorzugt, so ist es jedoch auch nicht ausgeschlossen, dass das erfindungsgemäße Copolymer neben den Struktureinheiten (I) bis (V) noch weitere bivalente Struktureinheiten aufweist.

In einer bevorzugten Ausführungsform der Erfindung enthalten die Gesamtstruktur des erfindungsgemäßen Copolymers und/oder das optional vorhandene Segment A an bivalenten Struktureinheiten jeweils
i) 30-75, bevorzugt 35-70 Mol-% der Basisstruktureinheit (I),
ii) 15-55, bevorzugt 17-50 Mol-% der unpolaren Dicarbonsäurederivatstruktureinheit (II),
iii) 0-30, bevorzugt 0-10 Mol-% der polaren Dicarbonsäurederivatstruktureinheit (III),
iv) 0-35, bevorzugt 0-30 Mol-% der Sauerstoffgruppenstruktureinheit (IV) sowie
v) 0-20, bevorzugt 0-10 Mol-% der Kopfgruppenstruktureinheit (V).

In einer weiteren Ausführungsform der Erfindung enthalten die Gesamtstruktur des erfindungsgemäßen Copolymers und/oder das optional vorhandene Segment A an bivalenten Struktureinheiten jeweils
i) 40-75, bevorzugt 40-70 Mol-% der Basisstruktureinheit (I),
ii) 20-50 Mol-% der unpolaren Dicarbonsäurederivatstruktureinheit (II),
iii) 0-10 Mol-% der polaren Dicarbonsäurederivatstruktureinheit (III),
iv) 5-25, bevorzugt 8-20 Mol-% der Sauerstoffgruppenstruktureinheit (IV) sowie
v) 0-10 Mol-% der Kopfgruppenstruktureinheit (V).

In einer speziellen Ausführungsform der Erfindung enthalten die Gesamtstruktur des erfindungsgemäßen Copolymers und/oder das optional vorhandene Segment A an bivalenten Struktureinheiten jeweils
i) 45-67 Mol-% der Basisstruktureinheit (I),
ii) 23-50 Mol-% der unpolaren Dicarbonsäurederivatstruktureinheit (II),
iii) 0-5 Mol-% der polaren Dicarbonsäurederivatstruktureinheit (III),
iv) 10-20 Mol-% der Sauerstoffgruppenstruktureinheit (IV) sowie
v) 0-5 Mol-% der Kopfgruppenstruktureinheit (V).

Bevorzugt enthält das erfindungsgemäße Copolymer 10 - 500, besonders bevorzugt 15 - 300 Struktureinheiten, welche aus der Gruppe der bivalenten Struktureinheiten (I) bis (V) ausgewählt sind.

Typischerweise ist das die Basisstruktureinheit (I) erzeugende, eine olefinische Doppelbindung enthaltende Monomer (Ix) ausgewählt ist aus einem oder mehreren der Monomere der Gruppe bestehend aus Alkyl(meth)acrylaten, Alkenyl(meth)acrylaten von geradkettigen, verzweigten oder cycloaliphatischen Mono-Alkoholen mit 1 bis 22 Kohlenstoffatomen oder von geradkettigen oder verzweigten aromatischen oder gemischt aromatisch-aliphatischen Monoalkoholen mit 1 bis 22 Kohlenstoffatomen, Mono(meth)acrylaten von oligomeren oder polymeren Ethern, (Meth)acrylate von halogenierten Alkoholen; oxiranhaltige (Meth)acrylate, Styrol, substituierte Styrole, α-Olefine, Vinylether, Allylether; Methacrylnitril, Acrylnitril; Vinylgruppen aufweisende cycloaliphatische Heterocyclen mit wenigstens einem N-Atom als Ringglied, Vinylester von Monocarbonsäuren mit 1 bis 20 Kohlenstoffatomen, N-Alkyl- und N,N-Dialkylsubstituierte Acrylamide mit geradkettigen, verzweigten oder cycloaliphatischen Alkylgruppen mit 1 bis 22 Kohlenstoffatomen, ethylenisch ungesättigte Monomere mit mindestens einer carbonsauren, phosphonsauren, phosphorsauren und/oder sulfonsauren Gruppe und ungesättigten Fettsäuren.

Vorstehend im einzelnen noch nicht genannte Spezies der genannten Grundtypen des Monomers (Ix) können zum Beispiel eingesetzt werden:

Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Tridecyl(meth)acrylat, Cyclohexyl(meth)acrylat, Isobornyl(meth)acrylat, Allyl(meth)acrylat, t-Butyl(meth)acrylat; Aryl(meth)acrylate, substituiertes oder nicht substituiertes Benzyl(meth)acrylat, substituiertes oder nicht substituiertes und Phenyl(meth)acrylat, wie 4-Nitrophenylmethacrylat; Hydroxyalkyl(meth)acrylate von geradkettigen, verzweigten oder cycloaliphatischen Diolen mit 2 bis 36 Kohlenstoffatomen, wie 3-Hydroxypropylmethacrylat, 3,4-Dihydroxybutylmonomethacrylat, 2-Hydroxy-ethyl(meth)acrylat, 4-Hydroxybutyl(meth)acrylat, 2-Hydroxypropylmethacrylat, 2,5-Dimethyl-1,6-hexandiolmonomethacrylat, Hydroxyphenoxypropylmethacrylat, Mono(meth)acrylate von Polyethylenglykolen, Polypropylenglycolen oder gemischten Polyethylen/propylenglycolen, Poly(ethylenglycol)methylether(meth)acrylat, Poly(propylenglycol)methylether(meth)-acrylat mit 5 bis 80 Kohlenstoffatomen, Methoxyethoxyethyl(meth)acrylat, 1-Butoxypropyl(meth)acrylat, Cyclohexyloxymethyl(meth)acrylat, Methoxymethoxy-ethyl(meth)acrylat, Benzyloxymethyl(meth)acrylat, Furfuryl(meth)acrylat, 2- Butoxy-ethyl(meth)acrylat, 2-Ethoxyethyl(meth)acrylat, Allyloxymethyl(meth)acrylat, 1-Ethoxybutyl(meth)acrylat, 1-Ethoxyethyl(meth)acrylat, Ethoxymethyl(meth)acrylat, Caprolacton- und/oder Valerolacton-modifizierte Hydroxyalkyl(meth)acrylate mit einem Molekulargewicht von 220 bis 1200, wobei die Hydroxy(meth)acrylate bevorzugt von geradkettigen, verzweigten oder cycloaliphatischen Diolen mit 2 bis 8 Kohlenstoffatomen abgeleitet sind; Perfluoralkyl(meth)acrylate mit 6 bis 20 Kohlenstoffatomen; oxiranhaltige (Meth)acrylate, vorzugsweise 2,3-Epoxybutylmethacrylat, 3,4-Epoxybutylmethacrylat, Glycidyl(meth)acrylat; α-Methylstyrol, 4-Methylstyrol; 1-Hexen, 1-Hepten, 1-Octen, 1-Nonen, 1-Decen, 1-Undecen, 1-Dodecen; 1-[2-(Methacrylyloxy)-ethyl]-2-imidazolidin, N-Vinylpyrrolidon, N-Vinylcaprolactam, Vinylacetat; N-(t-Butyl)acrylamid, N,N-Dimethylacrylamid, (Meth)acrylsäure, Carboxyethyl(meth)acrylat, Citraconsäure, Crotonsäure, Zimtsäure, Vinylsulfonsäure, 2-Methyl-2-[(1-oxo-2-propenyl)amino]-1-propansulfonsäure, Styrolsulfonsäure, Vinylbenzolsulfonsäure, Vinylphosphonsäure sowie deren Ester, Vinylphosphorsäure sowie deren Ester, 2-(Meth)acryloyloxyethylphosphat, 3-(Meth)acryloyloxypropylphosphat, 4-(Meth)acryloyloxybutylphosphat, 4-(2-Methacryloyloxyethyl)trimellithsäure und die in der EP-A-1674067 genannten, saure Gruppen sowie eine polymerisierbare Doppelbindung aufweisenden Monomere.

Nach erfolgter Polymerisation können die betreffenden Struktureinheiten, die sich von diesen ethylenisch ungesättigten Monomeren ableiten, noch weiter modifiziert werden.

So lassen sich zum Beispiel Oxiranstrukturen mit nucleophilen Verbindungen, wie 4-Nitrobenzoesäure, umsetzen. Hydroxygruppen können mit Lactonen, wie zum Beispiel ε-Caprolacton, zu Polyestern umgesetzt werden und aus Estergruppen können durch säure- oder basenkatalysierte Esterspaltung Polymer-Struktureinheiten mit OH-Gruppen freigesetzt werden.

Weitere mögliche Modifikationen stellen z.B. die Umsetzung von Struktureinheiten erhältlich durch Polymerisation von OH-Gruppen enthaltenden, ethylenisch ungesättigten Monomeren wie z. B. Hydroxyalkyl(meth)acrylaten, mit entsprechenden, reaktiven cyclischen Carbonsäureanhydriden zu deren sauren Halbester oder die Umsetzung der OH-Gruppen mit Sultonen oder die Umsetzung der OH-Gruppen mit Phosphorylierungsmitteln oder die Carboxymethylierung dieser OH-Gruppen dar.

Auch durch Hydrolyse von Struktureinheiten der Copolymere kann eine Modifikation erfolgen.

Typische durch entsprechende Pfropfung als Modifikation erhältliche Struktureinheiten sind beispielsweise nachstehende Einheiten (XXa) sowie (XXb), wobei R³ sowie X³ jeweils die vorstehend erwähnten Entsprechungen aufweisen:

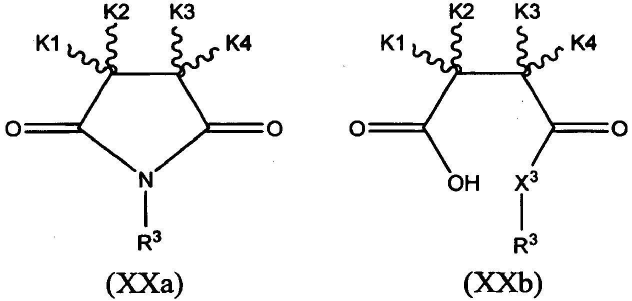

Häufig werden mindestens 60 Mol-%, bevorzugt mindestens 90 Mol-% der der Basisstruktureinheit (I) zugehörigen Struktureinheiten durch Umsetzung von Styrol und/oder dessen Derivaten, α-Olefinen, Acrylaten und/oder Methacrylaten erzeugt. Besonders bevorzugt werden allerdings mindestens 60 Mol-%, bevorzugt mindestens 90 Mol-% der der Basisstruktureinheit (I) zugehörigen Struktureinheiten durch Umsetzung von Styrol erzeugt.

In einer bevorzugten Ausführungsform der Erfindung basieren die erfindungsgemäßen Copolymere auf als deren Vorprodukte vorliegenden SMA-Harzen (welche durch Pfropfung modifiziert werden - siehe nachstehend) mit einem Styrol-Maleinsäureanhydrid-Verhältnis von 1:1 bis 8:1, bevorzugt von von 1:1 bis 4:1, besonders bevorzugt von 1:1 bis 2:1.

Die oberflächenaktive Wirkung der unpolaren Dicarbonsäurederivatstruktureinheit (II) wird wesentlich durch die Auswahl der in dieser enthaltenen Reste, insbesondere durch R¹ bzw. (falls vorhanden) R² bestimmt.

In einer bevorzugten Ausführungsform der Erfindung sind R¹ und R² jeweils gleich oder verschieden und werden jeweils unabhängig voneinander repräsentiert durch einen verzweigten oder unverzweigten Alkylrest und/ oder einen verzweigten oder unverzweigten Alkenylrest, die jeweils bevorzugt vorliegen in Form von Polyolefinresten, welche jeweils auf 2 - 8 Kohlenstoffatome enthaltenden Olefinen (als Monomereinheit) basieren.

In der Regel sind R¹ und R² jeweils gleich oder verschieden und werden jeweils unabhängig voneinander repräsentiert durch einen Polyisobutylenrest und/oder einen nichthydrierten, teilhydrierten und/ oder vollständig hydrierten Polybutadienrest und oder einen nichthydrierten, teilhydrierten und/ oder vollständig hydrierten Polyisoprenrest. Entsprechende endgruppenfunktionelle Polyolefine sind bekannt. So wird beispielsweise der Zugang zu hydroxy- bzw. aminofunktionellem Polyisobutylenen in US 7291681, US 6875897 und US 20080274924 beschrieben.

Häufig werden insgesamt mindestens 60 Mol-%, bevorzugt mindestens 80 Mol-% der Reste, welche als R¹ und/oder R² vorliegen, durch einen 50-200, bevorzugt 60-120 Kohlenstoffatome aufweisenden Polyisobutylenrest repräsentiert.

Die Gesamtstruktur des erfindungsgemäßen Copolymers als solches und/ oder das optional vorhandene Segment A können jeweils an bivalenten Struktureinheiten 0,1-10 Mol-% der polaren Dicarbonsäurederivatstruktureinheit (III) enthalten.

Unter Hydrolyse fördernden Bedingungen liegt die Struktureinheit (III) normalerweise nicht als Maleinsäureanhydridstruktureinheit, sondern als Maleinsäurestruktureinheit vor, die je nach Umgebung versalzt bzw. deprotoniert vorliegt.

Die Gesamtstruktur des erfindungsgemäßen Copolymers als solches und/ oder das optional vorhandene Segment A können jeweils an bivalenten Struktureinheiten 1-10 Mol-% der Sauerstoffgruppenstruktureinheit (IV) aufweisen.

E² (ggf. zusammen mit E³) ist als der Ester- und/oder Ethergruppen aufweisende charakteristische Rest der Sauerstoffgruppenstruktureinheit (IV) anzusehen.

Üblicherweise sind E² und E³ gleich oder verschieden und enthalten meist jeweils 4-300, bevorzugt 10-100, besonders bevorzugt 12-50 Ethersauerstoffatome.

Bevorzugt durch Pfropfung mit entsprechenden Polyalkylenoxidmonoaminen erhältlich, liegt E² der Sauerstoffgruppenstruktureinheit (IV) als eine Polyalkylenoxidkette vor, welche über eine Amid- bzw. Imidverknüpfung mit dem Maleinsäuregrundgerüst verbunden ist. Besagte als Propfungsreagenzien eingesetzte Polyalkylenoxidmonoamine sind typischerweise C₁-C₂₄-alkoholgestartete Polyether (auf dem Wege der Alkoxylierung hergestellt - und somit terminal eine Alkylgruppe enthaltend), die vorwiegend aus Ethylenoxid, Propylenoxid, Butylenoxid und/oder Styroloxid aufgebaut sind und als Endgruppe eine primäre oder sekundäre, vorzugsweise eine primäre Aminogruppe (bevorzugt als einzige propfungsreaktive Gruppe) tragen. Desweiteren sind auch Wiederholungseinheiten auf Basis von Monoglycidethern, Monoglycidestern, Oxetanen und/oder Tetrahydrofuran als Monomere - ggf. in Kombination mit den zuvor genannten Epoxidmonomeren als Bausteinen - möglich. In der Regel basieren diese Polyalkylenoxidmonoamine ausschließlich auf Ethylenoxid und/ oder Propylenoxid, wobei das Gewichtsverhältnis von Ethylenoxid zu Propylenoxid variabel ist. Zur Erzeugung eines besonders polaren E²-Restes wird entsprechend mehr Ethylenoxid eingesetzt (ggf. ausschließlich Ethylenoxid), wobei durch den Einsatz von Propylenoxid die Polarität sowie die Kristallisationsneigung entsprechend reduziert werden können. Das Molekulargewicht der typischerweise eingesetzten Polyalkylenoxidmonoamine liegt meist zwischen 150 und 12500 g/mol, bevorzugt zwischen 500 und 5.000 g/mol, besonders bevorzugt zwischen 700 und 3.000 g/mol. Alternativ können zur Bereitstellung des Restes E² auch andere Pfropfungsreagenzien eingesetzt werden, wie monohydroxyterminierte Polyether, monohydroxyterminierte Polyester und/oder monohydroxy-terminierte Polyether-Polyester-Blockcopolymere. Den entsprechenden Polyetherstrukturen liegen als bevorzugte Wiederholungseinheiten Ethylenoxid-, Propylenoxid-, Butylenoxid-, Styroloxid-, Alkylglycidylether- und/oder Phenylglycidylether-basierende Wiederholungseinheiten vor. Je nach gewünschter Polarität von E² wird in der Regel entsprechend aus Ethylenoxid und Propoylenoxid ausgewählt, wobei das Molekulargewicht der Polyetherkette typischerweise zwischen 300 g/mol und 5.000 g/mol beträgt. Geeignete monohydroxyterminierte Polyester und monohydroxy-terminierte Polether-Polyester-Blockcopolymere sind ausgehend von "Monohydroxystartkomponenten", die durch Polymerisation einer oder mehrerer (ggf. alkylsubstituierter) Hydroxycarbonsäuren und/oder deren Lactone (wie Butyrolacton, Valerolacton, Caprolacton, insbesondere ε-Caprolacton) erhalten werden können. Entsprechende Strukturen weisen in der Regel ein Molekulargewicht von 150 bis 5.000 g/mol auf.

Das vorstehend bezüglich E² Gesagte trifft entsprechend auch für E³ zu.

Die Gesamtstruktur des erfindungsgemäßen Copolymers als solches und/ oder das optional vorhandene Segment A können jeweils an bivalenten Struktureinheiten 1-10 Mol-% der Kopfgruppenstruktureinheit (V) enthalten.

Typische Pfropfungsreagenzien, die zur Herstellung der Kopfgruppenstruktureinheit (V) eingesetzt werden können, sind N,N-disubstituierte Diamine. N,N-disubstituierte Diamine besitzen die allgemeine Struktur R²¹R²²N-R'-NR²³H. Hierbei können R²¹ und R²², gleich oder verschieden, ein aliphatischer, cyclischer oder aromatischer oder aliphatisch-aromatischer Kohlenwasserstoffsubstituent sein, wie ein Methyl-, Ethyl-, Propyl-, 2-Ethylhexyl-, Cyclohexyl-, Benzyl- oder Phenylsubstituent sein. R²³ kann, gleich oder verschieden, in der Bedeutung von R²¹ oder für Wasserstoff stehen. Bevorzugt handelt es sich bei R²¹ und R²² um Methyl- und Ethylsubstituenten und bei R²³ um Wasserstoff.

Hierbei kann R' ein aliphatischer, cyclischer oder aromatischer oder aliphatischaromatischer Kohlenwasserstoffrest sein.

Bevorzugte N,N-disubstituierte Diamine sind N,N-Dialkylaminoalkylamine wie N,N-Dimethylaminoethylamin, N,N-Dimethylaminopropylamin, N,N-Diethylaminoethylamin und N,N-Diethylaminopropylamin.

Optional können neben diesen funktionalisierten Kohlenwasserstoffen zur Herstellung der erfindungsgemäßen Kammcopolymere zusätzlich auch Aminoalkohole eingesetzt werden. Aminoalkohole besitzen die allgemeine Struktur R³¹R³²N-R"-OH. Hierbei können R³¹ und R³², gleich oder verschieden, in der Bedeutung von Wasserstoff oder von R²¹ stehen und R" in der Bedeutung von R'. Typische Aminoalkohole sind Hydroxyalkylamine wie Hydroxyethylamin, Hydroxypropylamin, Hydroxybutylamin und höhere Homologe. Bevorzugte Aminoalkohole sind N,N-disubstituierte Aminoalkylalkohole wie N,N-Dimethylaminoethanol und N,N-Diethylaminoethanol.

Die ggf. eingesetzten N,N-disubstituierte Diamine bzw. Aminoalkohole können in einer anschließenden Alkylierungsreaktion an der tertiären Aminofunktion partiell oder vollständig zu quartären Ammoniumsalzen umgesetzt werden. Zur Alkylierung können zum Beispiel organische Halogenide wie Benzylchlorid, Methyliodid oder Alkylierungsmittel wie Dimethylsulfat oder eine Kombination von Oxiranen, wie zum Beispiel einem Glycidylether oder Styroloxid, mit Säuren wie z.B. Carbonsäuren verwendet werden.

Bei Einsatz von primären Hydroxyalkylaminen reagiert die Aminogruppe bevorzugt mit der Anhydridgruppierung des Grundpolymers, so dass die dann nicht abreagierte Hydroxyfunktion weiteren Modifikationen, z.B. eine Phosphorylierung (z.B. mit Polyphosphorsäure zu Phosphorsäureestern) oder einer Umsetzung mit einem cyclischen Säureanhydrid (beispielsweise Maleinsäureanhydrid, Bernsteinsäureanhydrid, Phthalsäureanhydrid) zum sauren Halbester zugänglich ist.

In einer speziellen Ausführungsform der Erfindung enthält die Gesamtstruktur des erfindungsgemäßen Copolymers einerseits das Segment A sowie andererseits wenigstens ein weiteres bivalente Struktureinheiten aufweisendes Segment B, wobei das Segment A als ein Block A sowie das Segment B als ein an Block A gebundener Block B vorliegt, welcher sich gemäß der Konzentration der bivalenten Struktureinheiten (I) - (V) und/oder bezüglich der Art der bivalenten Struktureinheiten von Block A unterscheidet.

Insofern das erfindungsgemäße Copolymer als Blockcopolymer vorliegt, enthält es normalerweise mindestens 5 Struktureinheiten pro Block, bevorzugt beträgt die Mindestzahl an Struktureinheiten pro Block 10. In jedem der Blöcke können dieselben Struktureinheiten, jedoch in unterschiedlicher Zahl bzw. Konzentration vorliegen, wobei die Blöcke auch unterschiedlichen Struktureinheiten enthalten können. Ein zur Herstellung des erfindungsgemäßen Copolymers einsetzbares lineares oder verzweigtes Copolymervorprodukt weist beispielsweise eine Blockstruktur vom Typ A-B, A-B-A, B-A-B, A-B-C und/oder A-C-B auf, wobei sich die Blöcke A, B und C jeweils lediglich in der Zusammensetzung bzw. Konzentration der Struktureinheiten unterscheiden müssen. Mit dem besagten Unterschied bezüglich Zusammensetzung bzw. Konzentration ist in diesem Zusammenhang gemeint, dass sich in zwei benachbarten Blöcken der Anteil der Struktureinheiten um mindestens 5 Gew.-% bezogen auf die Gesamtmenge des jeweiligen Blocks voneinander unterscheiden muss.

Die Erfindung betrifft auch die Herstellung des erfindungsgemäßen Copolymers. Zweckmäßigerweise erfolgt die Herstellung des erfindungsgemäßen Copolymers dadurch, dass in einem vorherigen Schritt ein Copolymervorprodukt durch Polymerisation hergestellt wird, wobei in einem nachherigen Schritt durch Pfropfungsreaktionen die unpolare Dicarbonsäurederivatstruktureinheit (II) und gegebenenfalls jeweils die Sauerstoffgruppenstruktureinheit (IV) und/ oder die Kopfgruppenstruktureinheit (V) ausgebildet werden.

In der Regel weist das Copolymervorprodukt ein zahlenmittleres Molekulargewicht von 600 - 25.000 g/mol, bevorzugt von 800 - 10.000 g/mol, besonders bevorzugt von 1.000 - 5.000 g/mol auf.

Das zahlenmittlere Molekulargewicht wird mittels Gelpermeationschromatographie gemäß DIN 55672 ermittelt.

Vorzugsweise sind die zur Herstellung der erfindungsgemäßgen Copolymere einsetzbaren linearen oder verzweigten Maleinsäureanhydrid basierten Vorprodukte herstellbar durch radikalisch initiierte Polymerisation, zum Beispiel mit Azo- oder Peroxidinitiatoren. Um das gewünschte Molekulargewicht einzustellen, können Kettenregler (Kettenüberträger) wie zum Beispiel Thiole, sekundäre Alkohole oder Alkylhalogenide wie Tetrachlorkohlenstoff während der Polymerisation zugegeben werden. Weitere mögliche Herstellverfahren betreffen kontrollierte radikalische Polymerisationsverfahren. Je nachdem, welches der nachstehend aufgeführten kontrollierten Polymerisationstechniken ggf. eingesetzt wird, werden selbst bei Einsatz identischer ethylenisch ungesättigter Monomere und selbst bei denselben molaren Verhältnissen der Monomere unterschiedliche Copolymere erhalten, da unterschiedlichen Polymerisationstechniken zu unterschiedlichen Mikrostrukturen bzw. zu unterschiedlichen Abfolgen der Struktureinheiten führen können. Die Verfahren zur kontrollierten radikalischen Polymerisation sind literaturbekannt. Eine Übersicht über einige Verfahren ist in Prog. Polym. Sci. 32 (2007) 93-146 und in Chem. Rev. 2009, 109, 4963-5050 zu finden.

Beispielhaft sind nachfolgend einige Technologien zur Durchführung kontrollierter Polymerisationen genannt:

Die "Atom Transfer Radical Polymerization" (ATRP) ermöglicht eine kontrollierte Polymerisation und ist beispielsweise in Chem. Rev. 2001, 101, 2921 und in Chem. Rev. 2007, 107, 2270-2299 beschrieben.

Zu den kontrollierten Polymerisationsverfahren gehört auch der "Reversible Addition Fragmentation Chain Transfer Process" (RAFT), der bei Verwendung bestimmter Polymerisationsregler auch "MADIX" (macromolecular design via the interchange of xanthates) und "Addition Fragmentation Chain Transfer" genannt wird. RAFT ist beispielsweise in Polym. Int. 2000, 49, 993, Aust. J. Chem 2005, 58, 379, J. Polym. Sci. Part A: Polym. Chem. 2005, 43, 5347, Chem. Lett. 1993, 22, 1089, J. Polym. Sci., Part A 1989, 27, 1741 sowie 1991, 29, 1053 sowie 1993, 31, 1551 sowie 1994, 32, 2745 sowie 1996, 34, 95 sowie 2003, 41, 645 sowie 2004, 42, 597 sowie 2004, 42, 6021 und auch in Macromol. Rapid Commun. 2003, 24, 197, in Polymer 2005, 46, 8458-8468 sowie Polymer 2008, 49, 1079-1131 und in US 6 291 620, WO 98/01478, WO 98/58974 und WO 99/31144 beschrieben.

Gemäß einem weiteren Verfahren zur kontrollierten Polymerisation werden Nitroxylverbindungen als Polymerisationsreglern (NMP) eingesetzt, wie in Chem. Rev. 2001, 101, 3661 offenbart wird.

Ein weiteres kontrolliertes Polymerisationsverfahren ist auch die "Group Transfer Polymerization" (GTP) wie sie von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff., sowie in O.W. Webster, Adv. Polym. Sci. 2004, 167, 1-34 offenbart ist.

Die kontrollierte radikalische Polymerisation mit Tetraphenylethan, wie sie in Macromol. Symp. 1996, 111, 63 beschrieben ist, ist ein weiteres Beispiel.

Eine kontrollierte radikalische Polymerisation mit 1,1-Diphenylethen als Polymerisationsregler ist beispielsweise in Macromolecular Rapid Communications, 2001, 22, 700 beschrieben.

Die kontrollierte radikalische Polymerisation mit Organotellur-, Organoantimon- und Organobismuth-Kettenüberträgern wird in Chem. Rev. 2009, 109, 5051-5068 beschrieben.

Weiterhin ist eine kontrollierte radikalische Polymerisation mit Inifertern beispielsweise in Makromol. Chem. Rapid. Commun. 1982, 3, 127 erläutert.

Eine kontrollierte radikalische Polymerisation mit Organokobaltkomplexen ist beispielsweise aus J. Am. Chem. Soc. 1994, 116, 7973, aus Journal of Polymer Science: Part A: Polymer Chemistry, Vol. 38, 1753-1766 (2000), aus Chem. Rev. 2001, 101, 3611-3659 sowie aus Macromolecules 2006, 39, 8219-8222 bekannt.

Eine weiteres kontrolliertes radikalische Polymerisationsverfahren ist die Reversible Chain Transfer Catalyzed Polymerization, wie sie in Polymer 2008, 49, 5177 erläutert ist.

Als weitere kontrollierte Polymerisationstechnik ist der Degenerative Chain Transfer mit Iod-Verbindungen, wie in Macromolecules 2008, 41, 6261, in Chem. Rev. 2006, 106, 3936-3962 oder in US 7 034 085 beschrieben, anwendbar.

Die kontrollierte radikalische Polymerisation in Gegenwart von Thioketonen wird beispielsweise in Chem. Commun., 2006, 835-837 und in Macromol. Rapid Commun. 2007, 28, 746-753 beschrieben.

Dabei sind die erhaltenen Copolymere (Vorprodukte des erfindungsgemäßen Copolymers) nicht zwangsläufig über den Polymerisationsregler als Endgruppe definiert. Die Endgruppe kann beispielsweise nach der Polymerisation ganz oder teilweise abgespalten werden. So ist es zum Beispiel möglich, die Nitroxylendgruppe der Copolymeren, welche mittels NMP hergestellt wurden, thermisch abzuspalten.

Die Anwendung kontrollierter radikalischer Polymerisationsverfahren eröffnet auch die Möglichkeit zur Herstellung von strukturierten Copolymeren.

Strukturierte Copolymere sind lineare Blockcopolymere, gradientenartige Copolymere, verzweigte/sternförmige Blockcopolymere und Kammcopolymere.

Im Fall von u.a. einsetzbaren gradientenartigen Copolymeren, nimmt entlang der Polymerkette die Konzentration der Struktureinheiten eines bestimmten ethylenisch ungesättigten Monomers oder der Struktureinheiten einer Mischung von ethylenisch ungesättigten Monomeren kontinuierlich ab und die Konzentration der Struktureinheiten eines davon unterschiedlichen ethylenisch gesättigten Monomeren oder der Struktureinheiten einer Mischung von davon unterschiedlichen ethylenisch ungesättigten Monomeren nimmt entsprechend zu.

Beispielhaft für gradientenartige Copolymere wird auf entsprechende Inhalte in EP 1 416 019 und WO 01/44389 sowie auf Macromolecules 2004, 37, 966, Macromolecular Reaction Engineering 2009, 3, 148, Polymer 2008, 49, 1567 und Biomacromolecules 2003, 4, 1386 verwiesen.

Ein bevorzugter Herstellungsweg eines erfindungsgemäßen Copolymers zeichnet sich dadurch aus, dass im ersten Schritt ein Copolymer von Maleinsäureanhydrid (ein Vorprodukt), besonders bevorzugt ein SMA-Harz, ggf. auch in Form eines Blockcopolymers vorliegend, ggf. in einer in einem Lösemittel angelösten Form bereitgestellt wird, welches in einem nachfolgenden zweiten Schritt einer Pfropfungsreaktion unterzogen wird. In diesem zweiten Schritt wird es bei Temperaturen von 20 bis 200 °C typischerweise umgesetzt mit einer Mischung enthaltend einen amino- oder hydroxyfunktionellen Kohlenwasserstoff (bevorzugt Kohlenwasserstoffe, die herstellbar sind über die Polymerisation eines ethylenisch ungesättigten Monomers), bevorzugt mit Polyisobutylenmonoalkohol, Polyisobutylenmonoamin, Polybutadienmonoalkohol, Polybutadienmonoamin, Polyisoprenmonoalkohol und/oder Polyisoprenmonoamin, ggf. in Kombination mit einem oder mehreren Polyalkylenoxidmonoaminen und/oder monohydroxyterminierten Polyethern, monohydroxyterminierten bzw. monoaminoterminierten Polyestern und/oder monohydroxyterminierten bzw. monoaminoterminierten Polyether-Polyesterblockcopolymeren und/oder N,N-disubstituierten Diaminen und/oder Aminoalkoholen. Normalerweise erfolgt diese Umsetzung so, dass mindestens 70% der Anhydridstrukturen umgesetzt werden. Bei besagter Propfung reagieren die Alkohole mit den Anhydridstrukturen zu Estern, die Aminogruppen reagieren mit den Anhydridstrukturen zu Amiden und Imiden. Je niedriger die Reaktionstemperatur ist, desto begünstigter ist die Amidbildung und je höher die Temperatur ist, desto begünstigter ist die Imidbildung. Zum Beispiel werden bei Temperaturen von 20°C bis 50°C fast ausschließlich Amide gebildet. Temperaturen von über 140°C favorisieren die Imidbildung. Da bei der Imidbildung Wasser freigesetzt wird, können Anhydridstrukturen der Copolymere auch durch dieses Wasser zu Carbonsäurefunktionen umgesetzt werden. Als Kupplungsgruppen der Propfungsreagentien können sekundäre Aminogruppen naturgemäß ausschließlich zu Amidgruppen und Hydroxylgruppen zu Estergruppen reagieren.

Bei der Umsetzung kann das zugegebene Lösemittel wieder abdestilliert werden, um zum Beispiel durch die Imidbildung anfallendes Wasser durch azeotrope Destillation zu entfernen.

In einem bevorzugten Herstellverfahren werden die SMA-Harze vor der Reaktionen mit den Aminen und/oder Alkoholen in einem Lösemittel homogen gelöst oder zumindest angequollen. Im Vergleich zu einer lösemittelfreien Vorgehensweise gewährleistet dieses Verfahren, dass alle Anhydridgruppen entlang der SMA-Harzketten zu Beginn der Reaktion reagieren können. Somit wird ein homogeneres Produkt erhalten.

Neben den vorstehend beschriebenen Propfungsreaktionen können eventuell noch weitere Modifizierungen (insbesondere Pfropfungen) des Copolymers durchgeführt werden. So lassen sich zum Beispiel Oxiranstrukturen mit nucleophilen Verbindungen, wie 4-Nitrobenzoesäure, umsetzen. Hydroxygruppen können mit Lactonen, wie ε-Caprolacton, zu Polyestern umgesetzt werden und aus Estergruppen können durch säure- oder basenkatalysierte Esterspaltung Polymer-Struktureinheiten mit OH-Gruppen freigesetzt werden.

Die vorliegende Erfindung betrifft weiterhin eine Komposition, herstellbar durch Mischen von mindestens zwei Komponenten, die jeweils bei der Mischtemperatur in flüssiger Form vorliegen, wobei bezogen auf das Gesamtgewicht der Komposition als eine stabilisierende dritte Komponente 0,1-10 Gew.-% des erfindungsgemäßen Copolymers als Phasenvermittler eingesetzt wird.

Grundsätzlich ist es möglich, dass in diesem Zusammenhang verschiedene Spezies des erfindungsgemäßen Copolymers in Kombination eingesetzt werden. Weiterhin können die erfindungsgemäßen Copolymere auch zusammen mit anderen oberflächenaktiven Verbindungen verwendet werden, um besonderen Spezialanforderungen gerecht zu werden.

In einer speziellen Ausführungsform liegt die erfindungsgemäße Komposition als Emulsion vor und enthält 0,1 bis 10 Gew.-% des erfindungsgemäßen Copolymers, 0,1 bis 50 Gew.-% eines Homo- oder Copolymers von Butadien sowie 10 bis 70 Gew.% eines ethylenisch-ungesättigten polymeren Harzes, welches in einem ethylenisch-ungesättigten Reaktiwerdünner gelöst sein kann (und wobei der Massenanteil des Reaktiwerdünners den 10 bis 70 Gew.% zuzurechnen ist). Besonders bevorzugt ist dabei eine Ausführungsform, bei der der Anteil der Butadienstruktureinheiten im Copolymer von Butadien mindestens 33, bevorzugt mindestens 50 Mol-% beträgt und das ethylenisch-ungesättigte polymere Harz bevorzugt als ungesättigter Polyester oder ungesättigter Vinylester vorliegt, die jeweils bevorzugt in Styrol (Reaktiwerdünner) gelöster Form vorliegen.

Ungesättigtes Polyesterharze sind bekannt und werden in der Regel durch Umsetzung von einfach ungesättigten Dicarbonsäuren mit Diolen, ggf. auch unter Mitverwendung von gesättigten Carbonsäuren oder (Di)cyclopentadien, erhalten wird, wie es beispielsweise in J. H. Aurer, A. Kasper, "Unsaturated Polyester Resins", Verlag Moderne Industrie, Landsberg/Lech 2003 beschrieben ist. Besonders bevorzugte dafür verwendete bifunktionelle, ethylenisch ungesättigte Carbonsäuren bzw. deren Derivate sind Maleinsäure und Fumarsäure sowie Maleinsäureanhydrid. Als bifunktionelle gesättigte Carbonsäurekomponente können jedoch zusätzlich auch Adipinsäure, Tetrahydrophthalsäure, Phthalsäure, Isophthalsäure, Terephthalsäure, HET-Säure (Hexachlor-endomethylen-tetrahydrophthalsäure) und Glutarsäure sowie die Anhydride dieser Carbonsäuren oder Diels-Alder-Addukte aus Maleinsäureanhydrid und Cyclopentadien mitverwendet werden. Bei der Herstellung von ungesättigten Polyesterharzen können auch Acrylsäure und Methacrylsäure mitverwendet werden. Zur Umsetzung kommen als bifunktionelle Alkoholkomponente vorzugsweise Propylen-, Dipropylen , Ethylen-, Diethylen- und Neopentylglykol, sowie 1,4-Butandiol, 1,6-Hexandiol, alkoxyliertes Bisphenol A und 2,2,4-Trimethylpentan-1,3-diol in Frage. Neben den bisfunktionellen Carbonsäuren und Alkoholen können auch höherfunktionelle Carbonsäuren und Alkohole einsetzt werden, um verzweigte Polykondensationsprodukte zu erhalten.

Weiterhin betrifft die vorliegende Erfindung eine Dispersion, welche ein Dispergiermedium sowie dispergierten partikulären Feststoff enthält, der bevorzugt in Form eines anorganischen Füllstoffs und/oder in Form eines anorganischen oder organischen Pigments und/oder in Form von Kohlenstoff-Nanoröhren und/oder in Form von Graphenen, vorliegt, wobei bezogen auf das Gesamtgewicht der Dispersion 0,1-10 Gew.-% des erfindungsgemäßen Copolymers als Netz- und Dispergiermittel eingesetzt wird.

Es ist auch möglich, Mischungen verschiedener erfindungsgemäßer Copolymere in Zusammenhang mit dieser Anwendung einzusetzen. Weiterhin können die erfindungsgemäßen Copolymere auch zusammen mit anderen oberflächenaktiven Verbindungen verwendet werden, um besonderen Spezialanforderungen gerecht zu werden.

Schließlich betrifft die Erfindung die Verwendung des erfindungsgemäßen Copolymers als Phasenvermittler, als Entlüfter-Additiv oder als Netz- und Dispergiermittel.

Die grenzflächenaktiven erfindungsgemäßen Copolymere können zusätzlich zu den vorstehend bereits erwähnten Anwendungen auch als Entschäumer, Verlaufsmittel, Schlagzähmodifikator oder Haftvermittler eingesetzt werden.

Die Erfindung soll nachstehend anhand von Ausführungsbeispielen näher erläutert werden.

### Beispiele

### A) Herstellung der Kammcopolymere

**Tabelle 1: Zur Polymersynthese eingesetzte Rohstoffe**

| *Bezeichnung* | *Beschreibung* |
|---|---|
| SMA-Grundpolymer 1 | Copolymer von Styrol und Maleinsäureanhydrid, molares Verhältnis 1:1; Molekulargewicht Mₙ ca. 2000 |
| SMA-Grundpolymer 2 | Copolymer von Styrol und Maleinsäureanhydrid, molares Verhältnis 2:1; Molekulargewicht Mₙ ca. 3000 |
| SMA-Grundpolymer 3 | Copolymer von Styrol und Maleinsäureanhydrid, molares Verhältnis 4:1; Molekulargewicht Mₙ ca. 3600 |
| Polymeramin 1-Lösung | Polyisobutylenmonoamin mit endständiger primärer Aminogruppe, 66 Gew.%-ige Lösung in aliphatischem Kohlenwasserstoff; Mₙ gemäß GPC: 1000 |
| Polymeramin 2 | Polyethermonoamin mit endständiger primärer Aminogruppe, Molgewicht ca. 2000; molares Verhältnis von Ethylenoxid- zu Propylenoxid-Wiederholungseinheiten ca. 31/10 |
| Polymeramin 3 | Polyethermonoamin mit endständiger primärer Aminogruppe, Molgewicht ca. 2000; molares Verhältnis von Ethylenoxid- zu Propylenoxid-Wiederholungseinheiten ca. 6/29 |
| Polymeramin 4 | Polyethermonoamin mit endständiger primärer Aminogruppe, Molgewicht ca. 1000; molares Verhältnis von Ethylenoxid- zu Propylenoxid-Wiederholungseinheiten ca. 19/3 |
| Polymeralkohol 1 | Polybutadienmonoalkohol; Mₙ gemäß GPC: 7700 |
| Polymeralkohol 2 | Polyethylenglycolmonomethylether, Molgewicht ca. 750 |
| Shellsol A | Lösungsmittelnaphtha (Erdöl), leichte aromatische; komplexe Kombination von Kohlenwasserstoffen aus der Destillation aromatischer Laufe; besteht vorherrschend aus aromatischen Kohlenwasserstoffen mit Kohlenstoffzahlen vorherrschend im Bereich von C8 bis C10 |

### Copolymer 1:

In einem Rundkolben mit Rückflusskühler, Temperaturfühler und KPG-Rührer werden unter Stickstoffatmosphäre 10,00 g SMA-Grundpolymer 1 in 104,10 g Shellsol A gelöst. Man gibt 33,04 g Polymeramin 3 zu und rührt 4 Stunden bei 120 °C. Im Anschluss setzt man 61,33 g Polymeralkohol 1 sowie 1,04 g einer 10%-igen Lösung von Dibutylzinndilaurat in Xylol zu und rührt weitere 4 Stunden bei 120°C. Man erhält eine leicht-trübe, gelbliche, mittelviskose Flüssigkeit (50%-ige Lösung des Kammcopolymers in Shellsol A).

### Copolymer 2:

In einem Rundkolben mit Rückflusskühler, Temperaturfühler und KPG-Rührer werden unter Stickstoffatmosphäre 25,00 g einer 50%-igen Lösung von SMA-Grundpolymer 1 in 1-Methoxy-2-propylacetat, 57,80 g Polymeramin 2, 28,00 g Polymeramin 1-Lösung, 46,70 g 1-Methoxy-2-propylacetat, 39,50 g Shellsol A und 0,44 g 2,6-Di-tert-butyl-p-kresol vorgelegt und unter Rühren auf 120°C erhitzt. Man rührt noch 4 h bei 120°C. Man erhält eine leicht-trübe, gelbe, mittelviskose Flüssigkeit (45%-ige Lösung des Kammcopolymers).

### Copolymer 3:

In einem Rundkolben mit Rückflusskühler, Temperaturfühler und KPG-Rührer werden unter Stickstoffatmosphäre 25,00 g einer 50%-igen Lösung von SMA-Grundpolymer 1 in 1-Methoxy-2-propylacetat, 19,30 g Polymeramin 2, 83,85 g Polymeramin 1-Lösung, 57,15 g 1-Methoxy-2-propylacetat, 46,40 g Shellsol A und 0,44 g 2,6-Di-tert-butyl-p-kresol vorgelegt und unter Rühren auf 120°C erhitzt. Man rührt noch 4 h bei 120°C. Man erhält eine klare, gelbe, mittelviskose Flüssigkeit (38%-ige Lösung des Kammcopolymers).

### Copolymer 4:

In einem Rundkolben mit Rückflusskühler, Temperaturfühler und KPG-Rührer werden unter Stickstoffatmosphäre 25,00 g einer 50%-igen Lösung von SMA-Grundpolymer 2 in 1-Methoxy-2-propylacetat, 35,60 g Polymeramin 2, 51,60 g Polymeramin 1-Lösung, 47,60 g 1-Methoxy-2-propylacetat, 40,10 g Shellsol A und 0,44 g 2,6-Di-tert-butyl-p-kresol vorgelegt und unter Rühren auf 120°C erhitzt. Man rührt noch 4 h bei 120°C. Man erhält eine klare, gelbe, niederviskose Flüssigkeit (41%-ige Lösung des Kammcopolymers).

### Copolymer 5:

In einem Rundkolben mit Rückflusskühler, Temperaturfühler, KPG-Rührer, Anschluss für eine Membranvakuumpumpe und Wasserabscheider werden unter Stickstoffatmosphäre 14,40 g SMA-GRUNDPOLYMER 1, 44,40 g Polymeramin 2, 64,40 g Polymeramin 1-Lösung, 44,7 g Shellsol A, 90,80 g 1-Methoxy-2-propylacetat und 0,50 g 2,6-Di-tert-butyl-p-kresol vorgelegt und unter Rühren auf 160°C erhitzt. Man rührt unter Atmosphärendruck 1 h bei 160°C, danach 1 h bei 170°C und anschließend weitere 10 h bei 180°C. Im Anschluss rührt man noch 2 h bei 180°C unter einem reduzierten Druck von 80 mbar, wobei restliches Wasser und Teile der enthaltenen Lösungsmittel abdestilliert werden. Man verdünnt mit einem 1/1-Gemisch aus Shellsol A und 1-Methoxy-2-propylacetat, bis ein nichtflüchtiger Anteil von 45% erreicht wird. Man erhält eine gelbe, klare Flüssigkeit (45%-ige Lösung des Kammcopolymers).

### Copolymer 6:

In einem Rundkolben mit Rückflusskühler, Temperaturfühler und KPG-Rührer werden unter Stickstoffatmosphäre 10,00 g SMA-Grundpolymer 1, 89,40 g Polymeramin 1-Lösung und 99,40 g Shellsol A vorgelegt und unter Rühren auf 120°C erhitzt. Man rührt noch 8 h bei 120°C. Man erhält eine gelbe Flüssigkeit (35%-ige Lösung des Kammcopolymers).

### Copolymer 7:

In einem Rundkolben mit Rückflusskühler, Temperaturfühler und KPG-Rührer werden unter Stickstoffatmosphäre 10,00 g SMA-Grundpolymer 1, 44,70 g Polymeramin 1-Lösung, 4,40 g Oleylamin und 59,10 g Shellsol A vorgelegt und unter Rühren auf 120°C erhitzt. Man rührt noch 8 h bei 120°C. Man erhält eine gelbe Flüssigkeit (35%-ige Lösung des Kammcopolymers).

### Copolymer 8:

In einem Rundkolben mit Rückflusskühler, Temperaturfühler und KPG-Rührer werden unter Stickstoffatmosphäre 10,00 g SMA-Grundpolymer 2 in 109,40 g Shellsol A gelöst. Man gibt 14,20 g Polymeramin 2 zu und rührt 4 Stunden bei 120 °C. Im Anschluss setzt man 85,20 g Polymeralkohol 1 sowie 1,09 g einer 10%-igen Lösung von Dibutylzinndilaurat in Xylol zu und rührt weitere 4 Stunden bei 120°C. Man erhält eine leicht-trübe, gelbliche, mittelviskose Flüssigkeit (50%-ige Lösung des Kammcopolymers in Shellsol A).

### Copolymer 9:

In einem Rundkolben mit Rückflusskühler, Temperaturfühler und KPG-Rührer werden unter Stickstoffatmosphäre 100,00 g SMA-Grundpolymer 1, 308,00 g Polymeramin 2, 447,20 g Polymeramin 1-Lösung, 483,00 g Shellsol A und 3,52 g 2,6-Di-tert-butyl-p-kresol vorgelegt und unter Rühren auf 120°C erhitzt. Man rührt noch 7 h bei 120°C. Man erhält eine klare, gelbe, mittelviskose Flüssigkeit (53%-ige Lösung des Kammcopolymers).

### Copolymer 10:

### Stufe a:

In einem Rundkolben mit Rückflusskühler, Temperaturfühler und KPG-Rührer werden unter Stickstoffatmosphäre 59,1 g 2,4-Diphenyl-4-methyl-1-penten und 132,6 g 1-Methoxy-2-propylacetat vorgelegt und unter Rühren auf 130°C erhitzt. Anschließend wird innerhalb von 90 Minuten 250,3 g Methylmethacrylat mit 3,25 g 2,2'-Azodi(2-methylbutyronitril) zudosiert. Es wird 3 h weitergerührt (Produkt: Mₙ=630, M_{w}=2900).

### Stufe b:

In einem Rundkolben mit Rückflusskühler, Temperaturfühler und KPG-Rührer werden unter Stickstoffatmosphäre 100,00 g vom Produkt aus Stufe a) vorgelegt und unter Rühren auf 130°C erhitzt. Anschließend werden innerhalb von 60 Minuten parallel 1.) 27,6 g MSA mit 1,5 g 2,2'-Azodi(2-methylbutyronitril) in 55,6 g 1-Methoxy-2-propylacetat sowie 2.) 29,3 g Styrol zudosiert. Es wird 5 h weitergerührt (Produkt: Mₙ=1900, M_{w}=5400).

### Stufe c:

50,00 g des Produkts aus Stufe b) werden mit 155,3 g Polymeramin 1-Lösung und 56,6 g 1-Methoxy-2-propylacetat gemischt und 4 h bei 120°C gerührt. Es entsteht eine trübe, gelbe, mittelviskose Flüssigkeit (50%ig in 1-Methoxy-2-propylacetat/Mineralöl).

### Copolymer 11:

### Stufe a:

In einem Rundkolben mit Rückflusskühler, Temperaturfühler und KPG-Rührer werden unter Stickstoffatmosphäre 125,35 g 1-Methoxy-2-propylacetat und 23,6 g 2,4-Diphenyl-4-methyl-1-penten eingefüllt und unter Rühren auf 130°C erhitzt. Anschließend werden 68,6 g MSA angelöst in 100,00 g 1-Methoxy-2-propylacetat mit 4,00 g Di-t-butylperoxid parallel mit 130,54 g 2-Ethylhexylacrylat innerhalb von 90 Minuten zudosiert. Man rührt noch 5 h bei 130°C. Anschließend wird 5 Mal alle 30 Minuten mit 1,00 g Di-t-butylperoxid nachinitiiert. Man erhält eine klare, braune, nieder-mittelviskose Flüssigkeit (50%-ige Lösung; Mₙ=1400, M_{w}=3800).

### Stufe b:

Es werden 50,0 g des Produkts aus Stufe a) mit 160,1 g Polymeramin 1-Lösung und 48,1 g 1-Methoxy-2-propylacetat zusammengegeben und 4 h bei 120°C gerührt. Es entsteht eine klare, braune, mittelviskose Flüssigkeit (50%-ig in 1-Methoxy-2-propylacetat/Mineralöl).

### Copolymer 12:

### Stufe a:

In einem Rundkolben mit Rückflusskühler, Temperaturfühler und KPG-Rührer werden unter Stickstoffatmosphäre 84,2 g 1-Dodecen und 25,5 g Xylol eingefüllt und unter Rühren auf 140°C erhitzt. Anschließend werden portionsweise 7 Mal alle 30 Minuten 7,00 g MSA sowie je 1 mL Di-tert-butylperoxid parallel zugegeben. Man rührt noch 3 h bei 140°C. Da das entstandene Produkt fest wird, werden 82, 00 g Xylol nachträglich hinzugegeben. Man erhält eine klare, gelbe, mittelviskose Flüssigkeit (57%-ige Lösung; Mₙ=2500, M_{w}=7100).

### Stufe b:

25,00 g des Produkts aus Stufe a) werden mit 109,7 g POLYMERAMIN 1-LÖSUNG und 33,9 g 1-Methoxy-2-propylacetat gemischt und 4 h bei 120°C gerührt. Es entsteht eine klare, braune, mittelviskose Flüssigkeit (50%ig in 1-Methoxy-2-propylacetat/Mineralöl).

### Copolymer 13:

In einem Rundkolben mit Rückflusskühler, Temperaturfühler und KPG-Rührer werden unter Stickstoffatmosphäre 10,00 g SMA-Grundpolymer 1, 44,7 g POLYMERAMIN 1-LÖSUNG und 54,7 g Shellsol A eingefüllt und unter Rühren auf 120°C erhitzt. Man rührt noch 8 h bei 120°C. Anschließend werden 1,00 g Ethanolamin hinzugegeben und weitere 4 h bei 120°C gerührt. Man erhält eine klare, gelbe, mittelviskose Flüssigkeit (34%-ige Lösung).

### Copolymer 14:

In einem Rundkolben mit Rückflusskühler, Temperaturfühler und KPG-Rührer werden unter Stickstoffatmosphäre 50,00 g SMA-Grundpolymer 1 , 154,00 g Polymeramin 2, 223,60 g Polymeramin 1-Lösung, 241,50 g Shellsol A und 1,76 g 2,6-Di-tert-butyl-p-kresol vorgelegt und unter Rühren auf 120°C erhitzt. Man rührt noch 4 h bei 120°C. Man erhält eine klare, gelbe, mittelviskose Flüssigkeit (53%-ige Lösung des Kammcopolymers).

### Copolymer 15:

In einem Rundkolben mit Rückflusskühler, Temperaturfühler und KPG-Rührer werden unter Stickstoffatmosphäre 25,00 g einer 50%-igen Lösung von SMA-Grundpolymer 1 in 1-Methoxy-2-propylacetat, 38,50 g Polymeramin 2, 55,90 g der Polymeramin 1-Lösung, 99,10 g 1-Methoxy-2-propylacetat, 40,00 g Shellsol A und 0,44 g 2,6-Di-tert-butyl-p-kresol vorgelegt und unter Rühren auf 120°C erhitzt. Man rührt noch 4 h bei 120°C. Man erhält eine klare, gelbe, niederviskose Flüssigkeit (34%-ige Lösung des Kammcopolymers).

### Copolymer 16:

### Stufe a:

In einem Rundkolben mit Rückflusskühler, Temperaturfühler und KPG-Rührer werden unter Stickstoffatmosphäre 50,00 g SMA-Grundpolymer 1, 89,4 g POLYMERAMIN 1-LÖSUNG, 61,7 g Polymeramin 2 und 142,1 g Shellsol A eingefüllt und unter Rühren auf 120°C erhitzt. Man rührt noch 4 h bei 120°C. Man erhält eine klare, gelbe, mittelviskose Flüssigkeit (50%-ige Lösung).

### Stufe b:

In einem Rundkolben mit Rückflusskühler, Temperaturfühler und KPG-Rührer werden unter Stickstoffatmosphäre 100,00 g des Produkts aus Stufe a) und 3,1 g N,N-Dimethylaminopropylamin 4 h bei 120°C gerührt.

### Copolymer 17:

In einem Rundkolben mit Rückflusskühler, Temperaturfühler und KPG-Rührer werden unter Stickstoffatmosphäre 100,00 g des Produkts aus Stufe a) von Copolymer 16 und 6,2 g N,N-Dimethylaminopropylamin 4 h bei 120°C gerührt.

### Copolymer 18:

In einem Rundkolben mit Rückflusskühler, Temperaturfühler und KPG-Rührer werden unter Stickstoffatmosphäre , 20,00 g des Produkts aus Stufe b) von Copolymer 16, 0,7 g Benzylchlorid und 6,10 g 1-Methoxy-2-propylacetat eingefüllt und unter Rühren auf 120°C erhitzt. Man rührt noch 4 h bei 120°C. Man erhält eine klare, gelbe, mittelviskose Flüssigkeit (40%-ige Lösung).

### Copolymer 19:

In einem Rundkolben mit Rückflusskühler, Temperaturfühler und KPG-Rührer werden unter Stickstoffatmosphäre 20,00 g des Produkts aus Stufe b) von Copolymer 16 in 8,50 g Butylglykol unter Rühren auf 120°C erhitzt. Bei 70°C werden 0,7 g Benzoesäure hinzugegeben und bei Erreichen von 120°C werden 1,66 g eines C10-C16-Alkylglycidylethers (Grilonit RV 1814, Firma EMS-Chemie AG) hinzugegeben. Man rührt noch 6 h bei 120°C. Man erhält eine klare, braune, niederviskose Flüssigkeit (40%-ige Lösung).

### Copolymer 20:

In einem Rundkolben mit Rückflusskühler, Temperaturfühler und KPG-Rührer werden unter Stickstoffatmosphäre 25,00 g einer 50%-igen Lösung von SMA-Grundpolymer 1 in 1-Methoxy-2-propylacetat, 41,29 g Polymeramin 3, 55,90 g Polymeramin 1-Lösung, 99,10 g 1-Methoxy-2-propylacetat, 40,00 g Shellsol A und 0,44 g 2,6-Di-tert-butyl-p-kresol vorgelegt und unter Rühren auf 120°C erhitzt. Man rührt noch 4 h bei 120°C. Man erhält eine klare, gelbe, niederviskose Flüssigkeit (34%-ige Lösung des Kammcopolymers).

### Copolymer 21:

### Stufe a:

In einem Rundkolben mit Rückflusskühler, Temperaturfühler und KPG-Rührer werden unter Stickstoffatmosphäre 4,72 g 2,4-Diphenyl-4-methyl-1-penten, 33,34 g Itaconsäure und 100,00 g 1-Methoxy-2-propanol vorgelegt und unter Rühren auf 130°C erhitzt. Anschließend werden 26,60 g Styrol mit 2,36 g 2,2'-Azodi(2-methylbutyronitril) innerhalb von 60 Minuten zudosiert. Man rührt noch insgesamt 5 h bei 130°C, in denen 3 Mal mit jeweils 0,50 g 2,2'-Azodi(2-methy)butyronitril) nachinitiiert wird. Man erhält eine klare, gelbe, niederviskose Flüssigkeit (40%-ige Lösung).

### Stufe b:

Es werden 20,00 g des Produkts aus Stufe a) mit 32,60 g POLYMERAMIN 1-LÖSUNG und 21,75 g Polymeramin 2 in Rundkolben mit Rückflusskühler, Temperaturfühler, Wasserabscheider und KPG-Rührer werden unter Stickstoffatmosphäre zusammengegeben und 5 h bei 120°C gerührt. Man destilliert, bis die Reaktionsmischung einen nichtflüchtigen Anteil von 80 Gew.% erhält (trübe, gelbe, mittelviskose Flüssigkeit in Methoxypropanol/Methoxypropylacetat).

### Copolymer 22:

In einem Rundkolben mit Rückflusskühler, Temperaturfühler und KPG-Rührer werden unter Stickstoffatmosphäre 20,00 g SMA-Grundpolymer 3, 78,20 g Polymeramin 2, 117,25 g Polymeramin 1-Lösung und 113,60 g Shellsol A vorgelegt und unter Rühren auf 120°C erhitzt. Nach 1 Stunde werden noch 20,00 g 1-Methoxy-2-propylacetat hinzugegeben. Man rührt weitere 5 h bei 120°C. Man erhält eine leicht-trübe, gelbe, niederviskose Flüssigkeit (62%-ige Lösung).

### Copolymer 23:

### Stufe a:

In einem Rundkolben mit Rückflusskühler, Temperaturfühler und KPG-Rührer werden unter Stickstoffatmosphäre 50,00 g SMA-Grundpolymer 1 206,00 g Shellsol A und 148,90 g Polymeramin 1-Lösung vorgelegt und unter Rühren auf 120°C erhitzt. Man rührt noch 8 h bei 120°C. Man erhält eine trübe, gelbe, mittelviskose Flüssigkeit (36%-ige Lösung des Kammcopolymers).

### Stufe b:

In einem Rundkolben mit Rückflusskühler, Temperaturfühler und KPG-Rührer werden unter Stickstoffatmosphäre 50,00 g des Produkts aus Stufe a) sowie 1,41 g N,N-Dimethylaminopropylamin vorgelegt, auf 120°C erwärmt und bei dieser Temperatur weitere 4 h lang gerührt. Man erhält eine klare, gelbe, mittelviskose Flüssigkeit (38%-ige Lösung des Kammcopolymers).

### Copolymer 24:

In einem Rundkolben mit Rückflusskühler, Temperaturfühler und KPG-Rührer werden unter Stickstoffatmosphäre 50,00 g des Produkts aus Stufe a) von Copolymer 23 und 2,82 g N,N-Dimethylaminopropylamin vorgelegt und auf 120°C erwärmt. Man rührt 4 h lang bei dieser Temperatur. Man erhält eine klare, gelbe, mittelviskose Flüssigkeit (38%-ige Lösung des Kammcopolymers).

### Copolymer 25:

In einem Rundkolben mit Rückflusskühler, Temperaturfühler und KPG-Rührer werden unter Stickstoffatmosphäre 10,00 g SMA-Grundpolymer 1, 89,40 g Polymeramin 1-Lösung und 99,40 g Shellsol A vorgelegt und unter Rühren auf 120°C erhitzt. Man rührt noch 8 h bei 120°C. Man erhält eine klare, gelbe, mittelviskose Flüssigkeit (34%-ige Lösung des Kammcopolymers).

### Copolymer 26:

In einem Rundkolben mit Rückflusskühler, Temperaturfühler und KPG-Rührer werden unter Stickstoffatmosphäre 10,00 g SMA-Grundpolymer 1 in 82,76 g Shellsol A gelöst. Man gibt 12,33 g Polymeramin 2 zu und rührt 4 Stunden bei 120 °C. Im Anschluss setzt man 49,33 g Polymeralkohol 1 sowie 1,00 g einer 10%-igen Lösung von Dibutylzinndilaurat in Xylol zu und rührt weitere 3 Stunden bei 120°C. Im Anschluss werden noch 37,00 g der Polymeramin 1-Lösung zugesetzt und nochmals 3 Stunden bei 120°C erwärmt. Man erhält eine leicht-trübe, gelblich-braune, mittelviskose Flüssigkeit (50%-ige Lösung des Kammcopolymers).

### Vergleichsbeispiele (nicht erfindungsgemäß)

### Vergleichsbeispiel 1:

In einem Rundkolben mit Rückflusskühler, Temperaturfühler und KPG-Rührer werden unter Stickstoffatmosphäre 30,00 g SMA-Grundpolymer 1, 98,90 g Polymeramin 4 und 128,90 g Shellsol A vorgelegt und unter Rühren auf 120°C erhitzt. Man rührt noch 8 h bei 120°C. Man erhält eine klare, gelbe, niederviskose Flüssigkeit (50%-ige Lösung).

### Vergleichsbeispiel 2:

In einem Rundkolben mit Rückflusskühler, Temperaturfühler und KPG-Rührer werden unter Stickstoffatmosphäre 30,00 g SMA-Grundpolymer 1, 33,00 g Polymeramin 4 und 63,00 g Shellsol A vorgelegt und unter Rühren auf 120°C erhitzt. Man rührt noch 8 h bei 120°C. Anschließend lässt man abkühlen und gibt bei Raumtemperatur 6,80 g N,N-Dimethylaminopropylamin hinzu. Nun heizt man erneut auf 120°C. Die Viskosität steigt im ersten Augenblick stark an. Man rührt weitere 6 h bei 120°C. Man erhält eine trübe, gelbe, hochviskose-feste Substanz (50%-ige Lösung).

### B) Anwendungstechnische Ergebnisse

**Tabelle 2: Zur Anwendungstechnischen Prüfung eingesetzte Rohstoffe**

| *Name* | *Beschreibung* |
|---|---|
| Worleekyd B 6301 | niedrigviskoses, lufttrocknendes, langöliges Alkydharz (Hersteller: Worlée-Chemie GmbH, Lauenburg) |
| Isopar H | Lösungsmittel der Firma ExxonMobil Chemical, Isoalkane, C9-C12 |
| Worleethix V 747 | Thixotropes Langölalkyd auf Basis spezieller Fettsäuren (Hersteller: Worlée-Chemie GmbH, Lauenburg) |
| Calcium 10 | Trockenstoff "Octa-Soligen Calcium 10, basic" (10% Ca in Testbenzin; Hersteller: OMG Borchers GmbH, Langenfeld) |
| Bentone SD 1 | Rheologieadditiv für unpolare bis mittelpolare aliphatische und andere lösemittelbasierte Systeme (organisches Derivat von Bentonit-Clay, Hersteller: Elementis Specialties, Hightstown/NJ, USA) |
| Tronox CR 826 | dichtes Silica/Alumina-behandeltes Rutilpigment für vielfältige Anwendungen, TiO₂-Gehalt 93% (Firma Tronox, Uerdingen) |
| Dowanol DPM | Dipropylenglycolmonomethylether (Hersteller: Dow Chemical Company) |
| Cobalt 12 | Cobalt-Katalysator/Beschleuniger "Rockwood Durham Cobalt 12" (12% Co in dearomatisiertem Kohlenwasserstoff; Hersteller: Rockwood Pigments UK, Durham, Großbritannien) |
| Zirkonium 12 | Zirkonium-Katalysator "Rockwood Durham Zirconium 12" (12% Zr in dearomatisiertem Kohlenwasserstoff; Hersteller: Rockwood Pigments UK, Durham, Großbritannien) |
| Borchi Nox M2 | synthetisches organisches Hautverhinderungsmittel für ölhaltige Bindemittel (OMG Borchers GmbH, Langenfeld) |
| Shellsol D 40 | Aliphatische Kohlenwasserstoffe, Gemisch von n-, i- und cyclo-Aliphaten, überwiegend im Bereich C9-C11 (Hersteller: Shell Chemicals) |
| Palatal P4-01 | Harzsystem für die Herstellung von faserverstärkten Kunststoffen oder nicht-verstärkten gefüllten Produkten (Hersteller: DSM Composite Resins, Schaffhausen, Schweiz) |
| Accelerator NL-49P | Cobalt(II)-2-ethylhexanoat, 1 % Co, in einem aliphatischen Ester (Hersteller: Akzo Nobel Polymer Chemicals, Amersfoort, Niederlande) |
| Polyöl 130 | Flüssiges Polybutadien, stereospezifisch, niedrigviskos, unverseifbar (Hersteller: Evonik Industries, Essen) |
| Styroflex 2G66 | Styrol-Butadien-Blockcopolymer (Firma BASF, Ludwigshafen) |
| Palapreg P 17-02 | ungesättigtes Polyesterharz für die Herstellung von faserverstärkten Kunststoffen oder nicht-verstärkten gefüllten Produkten, Basis Orthophtalsäure und Standard-Glycole, gelöst in Styrol (Hersteller: DSM Composite Resins, Schaffhausen, Schweiz) |
| Palapreg H 850-01 | Polymethylmethacrylat, gelöst in Styrol (Hersteller: DSM Composite Resins, Schaffhausen, Schweiz) |
| Kraton D 1118 | Diblock-Copolymer basierend auf Styrol und Butadien mit einem gebundenen Styrolanteil von 31 Gew.% (Firma Kraton Performance Polymers, Houston, USA) |

### (I) Einsatz als Antiseparationsadditiv (Phasenvermittler)

### Testsystem 1:

Im Testsystem wird die Separationsgeschwindigkeit in einem System bestehend aus dem ungesättigten Polyesterharz Palapreg P17-02 und dem Styrol-Butadien-Copolymer Styroflex 2G66 bewertet. Hierzu wird zunächst das Styroflex 2G66 in Styrol angelöst (30%-ige Lösung). Die beiden Komponenten werden in folgendem Gewichtsverhältnis kombiniert:

**Tabelle 3: Zusammensetzung des Testsystems**

| *Komponente* | *Gewichtsteile* |
|---|---|
| Palapreg P17-02 | 70 |
| Styroflex 2G66, 30%-ig gelöst in Styrol | 30 (bezogen auf die Lösung) |

100 g der Mischung (Verhältnis der Komponenten wie in Tabelle 3 angegeben) werden in einem 180 ml-Becher gemischt. Es wird jeweils eine Additivmenge zugesetzt, die einem Anteil von 1 Gew.% der Additiv-Wirksubstanz im Gesamtsystem entspricht. Hiernach wird das Gemisch mit einem Dissolver (Typ Pendraulik LD 50, Zahnscheibe: 50 mm Durchmesser) zunächst 30 s bei 930 Umdrehungen pro Minute und dann 30 s bei 1865 Umdrehungen pro Minute homogenisiert und im Anschluss in ein zylinderförmiges, verschließbares 100 ml-Glasgefäß (Durchmesser: 3,5 cm, Höhe: 14 cm) überführt. Die Lagerung erfolgt bei 20 °C im verschlossenen Gefäß. Nach bestimmten Zeitspannen wird das Gemisch visuell auf einsetzende Phasenseparation überprüft.

**Tabelle 4: Beobachtung der Phasenseparation**

| Additiv | nach 1 h | nach 2 h | nach 4 h | nach 8 h | nach 24 h | nach 48 h | nach 72 h | nach 144 h |
|---|---|---|---|---|---|---|---|---|
| -- (Nullprobe) | beginnende Separ. | Teil-Separ. | vollst. Separ | vollst. Separ. | vollst. Separ. | vollst. Separ. | vollst. Separ. | vollst. Separ. |
| Copolymer 2 | keine Separ. | keine Separ. | keine Separ | beginnende Separ. | vollst. Separ. | vollst. Separ. | vollst. Separ. | vollst. Separ. |
| Copolymer 3 | keine Separ. | keine Separ. | keine Separ | beginnende Separ. | vollst. Separ. | vollst. Separ. | vollst. Separ. | vollst. Separ. |
| Copolymer 15 | keine Separ. | keine Separ. | keine Separ | keine Separ. | keine Separ. | keine Separ. | keine Separ. | keine Separ. |
| Copolymer 4 | keine Separ. | keine Separ. | keine Separ | keine Separ. | keine Separ. | keine Separ. | keine Separ. | keine Separ. |

| | | | | | | | | |
|---|---|---|---|---|---|---|---|---|
| Abkürzungen: Separ. = Separation; vollst. = vollständige | | | | | | | | |

Anhand der Tabelle 4 ist erkennbar, dass in Abwesenheit des Additivs eine Entmischung der beiden Komponententen innerhalb einer Stunde einsetzt, während in Gegenwart der Additive diese Entmischung entweder deutlich später oder aber - innerhalb des beobachteten Zeitraums von 6 Tagen (144 h) - gar nicht visuell zu beobachten war.

### Testsystem 2:

Im Testsystem wird die Separationsgeschwindigkeit in einem System bestehend aus dem ungesättigten Polyesterharz Palapreg P17-02 und dem Styrol-Butadien-Copolymer Kraton D 1118 bewertet. Hierzu wird zunächst das Kraton D 1118 in Styrol angelöst (30%-ige Lösung). Die beiden Komponenten werden in folgendem Gewichtsverhältnis kombiniert:

**Tabelle 5: Zusammensetzung des Testsystems**

| *Komponente* | *Gewichtsteile* |
|---|---|
| Palatal P17-02 | 70 |
| Kraton D 1118, 30%-ig gelöst in Styrol | 30 (bezogen auf die Lösung) |

100 g der Mischung (Verhältnis der Komponenten wie in Tabelle 5 angegeben) werden in einem 180 ml-Becher gemischt. Es wird jeweils eine Additivmenge zugesetzt, die einem Anteil von 1 Gew.% der Additiv-Wirksubstanz im Gesamtsystem entspricht. Hiernach wird das Gemisch mit einem Dissolver (Typ Pendraulik LD 50, Zahnscheibe: 50 mm Durchmesser) zunächst 30 s bei 930 Umdrehungen pro Minute und dann 30 s bei 1865 Umdrehungen pro Minute homogenisiert und im Anschluss in ein zylinderförmiges, verschließbares 100 ml-Glasgefäß (Durchmesser: 3,5 cm, Höhe: 14 cm) überführt. Die Lagerung erfolgt bei 20 °C im verschlossenen Gefäß. Nach bestimmten Zeitspannen wird das Gemisch visuell auf einsetzende Phasenseparation überprüft.

**Tabelle 6: Beobachtung der Phasenseparation**

| Additiv | nach 30 min | nach 2 h | nach 19 h | nach 24 h | nach 48 h | nach 67 h |
|---|---|---|---|---|---|---|
| -- (Nullprobe) | beginnende Separ. | Teil-Separ. | vollst. Separ. | vollst. Separ. | vollst. Separ. | vollst. Separ. |
| Copolymer 15 | keine Separ. | keine Separ. | keine Separ. | keine Separ. | keine Separ. | keine Separ. |

| | | | | | | |
|---|---|---|---|---|---|---|
| Abkürzungen: Separ. = Separation; vollst. = vollständige | | | | | | |

### Anhand der Tabelle 6 ist erkennbar, dass in Abwesenheit des Additivs eine Entmischung der beiden Komponententen innerhalb einer halben Stunde einsetzt, während in Gegenwart des Additivs diese Entmischung innerhalb des beobachteten Zeitraums von 67 Stunden gar nicht visuell zu beobachten war.

### Testsystem 3:

Im Testsystem wird die Separationsgeschwindigkeit in einem System bestehend aus dem ungesättigten Polyesterharz Palapreg P17-02 und der styrolischen Polymethylmethacrylat-Lösung Palapreg H850-01 bewertet. Hierzu werden die beiden Komponenten in folgendem Gewichtsverhältnis kombiniert:

**Tabelle 7: Zusammensetzung des Testsystems**

| *Komponente* | *Gewichtsteile* |
|---|---|
| Palapreg P17-02 | 70 |
| Palapreg H850-01 | 30 |

100 g der Mischung (Verhältnis der Komponenten wie in Tabelle 7 angegeben) werden in einem 180 ml-Becher gemischt. Es wird jeweils eine Additivmenge zugesetzt, die einem Anteil von 1 Gew.% der Additiv-Wirksubstanz im Gesamtsystem entspricht. Hiernach wird das Gemisch mit einem Dissolver (Typ Pendraulik LD 50, Zahnscheibe: 50 mm Durchmesser) zunächst 30 s bei 930 Umdrehungen pro Minute und dann 30 s bei 1865 Umdrehungen pro Minute homogenisiert und im Anschluss in ein zylinderförmiges, verschließbares 100 ml-Glasgefäß (Durchmesser: 3,5 cm, Höhe: 14 cm) überführt. Die Lagerung erfolgt bei 20 °C im verschlossenen Gefäß. Nach bestimmten Zeitspannen wird das Gemisch visuell auf einsetzende Phasenseparation überprüft.

**Tabelle 8: Beobachtung der Phasenseparation**

| Additiv | nach 2 h | nach 3 h | nach 5 h | nach 10 h | nach 24 h |
|---|---|---|---|---|---|
| -- (Nullprobe) | beginnende Separ. | vollst. Separ. | vollst. Separ. | vollst. Separ. | vollst. Separ. |
| Copolymer 15 | keine Separ. | keine Separ. | keine Separ. | keine Separ. | keine Separ. |
| Copolymer 11 | keine Separ. | keine Separ. | keine Separ. | keine Separ. | vollst. Separ. |
| Copolymer 21 | keine Separ. | keine Separ. | keine Separ. | beginnende Separ. | vollst. Separ. |

| | | | | | |
|---|---|---|---|---|---|
| Abkürzungen: Separ. = Separation; vollst. = vollständige | | | | | |

Anhand der Tabelle 8 ist erkennbar, dass in Abwesenheit des Additivs eine Entmischung der beiden Komponententen innerhalb von drei Stunden eintritt, während in Gegenwart der Additive diese Entmischung entweder deutlich später oder aber - innerhalb des beobachteten Zeitraums von 24 Stunden - gar nicht visuell zu beobachten war.

Die zuvor aufgezeigten Beispiele verdeutlichen, dass die erfindungsgemäßen Additive ihre Antiseparationswirkung und Flüssig-Flüssig-Mischungen unterschiedlicher Zusammensetzung verwirklichen können.

### (II) Einsatz als Netz- und Dispergiermittel

### Verträglichkeitstest

In einem Vortest wird zunächst die Verträglichkeit der Additive in dem betroffenenen Binde- bzw. Lösemittel überprüft. Hierzu werden folgende Mischungen hergestellt:
Bindemittel Worleekyd B 6301 / Additiv: 95 : 5 [20 g : 1,05 g]
Lösemittel Isopar H / Additiv: 95 : 5 [15 g : 0,79 g]

### Durchführung:

Das Bindemittel (Worleekyd B 6301) und das Lösemittel (Isopar H) werden in 50 ml-Schnappdeckelgläser gefüllt und eine bestimmte Menge der jeweiligen Additiv-Probe wird zudosiert. Man homogenisiert kurz mit dem Spatel. Die Trübung bzw. Phasenseparation wird am nächsten Tag visuell beurteilt.

**Tabelle 9: Ergebnisse des Verträglichkeitstests**

| **Additiv** | **in Worleekyd B 6301** | **in Isopar H** |
|---|---|---|
| Copolymer 9 | klar | trüb |
| Copolymer 25 | klar | klar |
| Copolymer 13 | klar | klar |
| Copolymer 23 | klar | klar |
| Copolymer 24 | klar | leicht milchig |
| Copolymer 16 | klar | trüb |
| Copolymer 17 | klar | trüb |
| Copolymer 19 | klar | leicht gelblich |
| Vergleichsbeispiel 1 | trüb | fester Bodensatz, nicht aufzuschütteln |
| Vergleichsbeispiel 2 | schaumig, nicht vollständig gelöst | nicht gelöst, Material setzt am Boden ab |

Aus der Tabelle 9 ist ersichtlich, dass die beiden nicht erfindungsgemäßen Vergleichsprodukte 1 und 2 aufgrund ihrer Unverträglichkeit im betrachteten System als Netz- und Dispergiermittel nicht geeignet sind; sie konnten in den Auflackungs-Untersuchungen entsprechend auch nicht ins System eingearbeitet und bewertet werden.

### Auflackung

### Herstellung der Lacke

Die Komponenten Worleethix V 747, Worleekyd 6301, "Calcium 10", Titandioxid (Tronox CR 826) und Bentone SD 1 sowie das Additiv wurden eingewogen und 20 min mit einem Dissolver Typ "Dispermat CV" bei 8000 U/min (Teflonscheibe, Durchmesser 4,5 cm) dispergiert. Die Mengenverhältnisse entsprachen den in der folgenden Tabelle 10a angegebenen. Die erfindungsgemäßen Additive wurden jeweils so eingesetzt, dass die im System enthaltene Menge der Wirksubstanz identisch war (siehe Tabelle 10b).

Im Anschluss wurden der Mischung die Komponenten Dowanol DPM, Cobalt 12, Zirkonium, Borchi Nox M2 und Shellsol D 40, ebenfalls in den in der Tabelle angegebenen Mengen, unter Rühren bei 1000 U/min zugefügt.

**Tabelle 10a: Zusammensetzung der hergestellten Lacke (alle Angaben in Gewichtsteilen)**

| *Komponente* | *Gewichtsteile* |
|---|---|
| Worleethix V 747 | 2,50 |
| Worleekyd 6301 90% | 55,67 |
| Calcium 10 | 0,83 |
| Additiv | *Menge siehe Tabelle 10b* |
| Bentone SD 1 | 0,33 |
| Tronox CR 826 | 21,00 |
| *Anreibung 20 Minuten Dispermat CV 8000 U*/*min* | |
| Dowanol DPM | 1,30 |
| Cobalt 12 | 0,83 |
| Zirkonium 12 | 1,70 |
| Borchi Nox M2 | 0,40 |
| Shellsol D 40 | 15,44 |

**Tabelle 10b: Eingesetzte Additivmengen (Gewichtsteile in Verhältnis zu den in Tab. 10a angegebenen Mengen) in Abhängigkeit vom Gehalt der Wirksubstanz der hergestellten Produkte (2% fest auf TiO₂)**

| | |
|---|---|
| Copolymer 9 | 0,79 |
| Copolymer 25 | 1,24 |
| Copolymer 13 | 1,24 |
| Copolymer 23 | 1,11 |
| Copolymer 24 | 1,11 |
| Copolymer 16 | 0,84 |
| Copolymer 17 | 0,84 |
| Copolymer 19 | 1,05 |

### Bewertung des Glanzes:

Der Lack wurde nach 1 Tag sowie nach 3 Tagen Lagerung bei Raumtemperatur mit einer 150 µm-Spiralrakel auf einer Glasplatte appliziert. Nach vollständiger Trocknung wurde der Glanz wird mit einem Glanzmessgerät Typ "Micro Tri Gloss" (Hersteller: BYK Gardner, Geretsried) unter verschiedenen Winkeln von 20° / 60° / 85° gemessen. Aus der u.a. Tabelle 10c ist ersichtlich, dass die Additive keinen negativen Einfluss auf den Glanz haben und gleichzeitig der Schleierwert (Haze) des Lackes gegenüber der Nullprobe ohne Additiv (Control) abgesenkt, also verbessert wird.

**Tabelle 10c: Glanzmessung der applizierten Lacke**

| Additiv in der Lackformulierung | **Glanz** | | | | | | |
|---|---|---|---|---|---|---|---|
| | **20°** | **60°** | **85°** | **20°** | **60°** | **85°** | **Haze** |
| | *nach 1 Tag* | | | *nach 3 Tagen* | | | |
| Control *ohne Netzmittel* | 84,4 | 92,2 | 98,7 | 83,0 | 92,0 | 96,4 | 55,0 |
| Copolymer 9 | 86,3 | 92,8 | 98,4 | 85,1 | 92,3 | 98,3 | 31,9 |
| Copolymer 25 | 85,2 | 92,2 | 98,9 | 84,1 | 92,0 | 98,8 | 25,8 |
| Copolymer 13 | 84,9 | 92,2 | 98,9 | 83,4 | 91,9 | 98,4 | 35,3 |
| Copolymer 23 | 84,9 | 92,2 | 98,6 | 81,8 | 91,4 | 98,6 | 36,6 |
| Copolymer 24 | 85,4 | 92,4 | 98,4 | 81,2 | 92,1 | 98,4 | 30,1 |
| Copolymer 16 | 86,0 | 92,9 | 98,8 | 81,9 | 92,7 | 98,6 | 52,1 |
| Copolymer 17 | 86,1 | 93,0 | 98,6 | 84,7 | 92,7 | 98,3 | 38,5 |
| Copolymer 19 | 86,3 | 92,8 | 98,6 | 84,2 | 92,1 | 97,9 | 23,2 |

### Bestimmung der Viskosität:

Nach 5 Tagen Lagerung bei Raumtemperatur und 14 Tagen Lagerung bei 50°C werden die Viskositäten der hergestellten Lacke bestimmt. Die Messung geschah mit einem Brookfield-Viskosimeter (Firma Brookfield, Lorch) unter Verwendung der Spindel 04 bei 5 und bei 50 U/min.

**Tabelle 11: Gemessene Viskositäten der Lacke.**

| Additiv in der Lackformulierung | **Viskositäten - Brookfield S04** | | | |
|---|---|---|---|---|
| | **05 U/min** | | **50 U/min** | |
| | 5 Tage RT | 14 Tage 50°C | 5 Tage RT | 14 Tage 50°C |
| Control *ohne Netzmittel* | 800 | 800 | 585 | 820 |
| Copolymer 9 | 560 | 680 | 568 | 740 |
| Copolymer 25 | 790 | 720 | 646 | 672 |
| Copolymer 13 | 720 | 760 | 604 | 672 |
| Copolymer 23 | 600 | 830 | 620 | 704 |
| Copolymer 24 | 640 | 600 | 574 | 640 |
| Copolymer 16 | 560 | 560 | 576 | 616 |
| Copolymer 17 | 560 | 560 | 596 | 612 |
| Copolymer 19 | 600 | 600 | 583 | 664 |

### Untersuchung der Farbpastenaufnahme:

Zur Untersuchung der Farbpastenaufnahme der hergestellten Weißlacke wurde eine Abtönpaste eingearbeitet (Colortrend 807-9957 HS Lamp Black 97: 3). Die Homogenisierung wurde durch 3 min Rütteln auf einem Skandex Rüttler (Modell SK450, Firma GROOTEC GmbH, Ichtershausen) durchgeführt.

Die Lacke wurden nach 1 Tag Lagerung bei Raumtemperatur mit einer 200 µm-Spiralrakel auf Kontrastkarten (Typ BYK-Gardner Nr. 2853) appliziert; nach ca. 30 Minuten wurde ein Rub-Out-Test durchgeführt.

Nach vollständiger Trocknung wurden die Proben mit einem "Colour Guide Sphere"-Messgerät (Firma BYK Gardner, Geretsried) gemessen (Ua/b-Werte und ΔE-Wert) sowie visuell beurteilt.

**Tabelle 12: Farbstärke und Farbtonstabilität der Lacke**

| | | **Worleekyd 6301** | | | | | | | | |
|---|---|---|---|---|---|---|---|---|---|---|
| | | | | | | | | | | |
| | | unbehandelte Fläche | | | rub out | | | **ΔE*¹** | **Farbstärke** | **Farbstärke rub out** |
| **Colortrend 807-9957 97:3** | | **L*** | **a*** | **b*** | **L*** | **a*** | **b*** | | | |
| **Control** *ohne Additiv* | | 55,66 | -1,33 | -4,68 | 53,71 | -1,14 | -4,57 | **1,95** | *100%* *² | *100%* *² |
| Copolymer 9 | | 53,46 | -1,24 | -4,62 | 53,18 | -1,18 | -4,55 | **0,29** | *116%* | *104%* |
| Copolymer 25 | | 54,16 | -1,29 | -4,63 | 52,84 | -1,20 | -4,48 | **1,33** | *111%* | *106%* |
| Copolymer 13 | | 55,32 | -1,33 | -4,65 | 53,96 | -1,22 | -4,51 | **1,37** | *103%* | *98%* |
| Copolymer 23 | | 54,12 | -1,21 | -4,40 | 53,63 | -1,18 | -4,55 | **0,51** | *111%* | *100%* |
| Copolymer 24 | | 54,10 | -1,22 | -4,40 | 53,67 | -1,16 | -4,62 | **0,48** | *111%* | *100%* |
| Copolymer 16 | | 54,08 | -1,30 | -4,76 | 53,49 | -1,17 | -4,65 | **0,60** | *111%* | *102%* |
| Copolymer 17 | | 55,01 | -1,29 | -4,56 | 54,01 | -1,18 | -4,45 | **1,01** | *105%* | *97%* |
| Copolymer 19 | | 54,88 | -1,29 | -4,61 | 53,96 | -1,19 | -4,52 | **0,91** | *106%* | *98%* |

| | | | | | | | | | | |
|---|---|---|---|---|---|---|---|---|---|---|
| **¹) zwischen unbehandelter Fläche* / *rub out* **²) Werte der Nullprobe "Control" (ohne Additiv) per Definition auf 100% gesetzt* | | | | | | | | | | |

Aus der Tabelle 12 ist ersichtlich, dass mittels der erfindungsgemäßen Additive gegenüber der Nullprobe zum einen eine deutliche Verbesserung des ΔE-Wertes erzielt werden kann und zum anderen die Farbstärke in vielen Fällen positiv beeinflusst wird.

### (III) Einsatz als Entlüfteradditiv

### Harzformulierung:

Zunächst werden folgende Bestandteile in den angegebenen Verhältnissen gemischt und durch Rühren homogenisiert:

**Tabelle 13: Zusammensetzung des Testsystems**

| | |
|---|---|
| Palatal P4-01 | 930 g |
| Styrol | 70 g |
| Accelerator NL-49P | 10 g |

50 g des so hergestellten Harzes werden mit 1,00 g Butanox M50 sowie 0,25 g Additiv (Lieferform) versetzt und mit einem Dissolver (Typ Pendraulik 5HWM, Zahnscheibe Durchmesser 4,5 cm) 30 s lang mit 4660 U/min gerührt. Das erhaltene Produkt wird auf einer PET-Folie ausgegossen. Der gebildete Flüssigkeitsfilm wir 30 s später mit einer zweiten PET-Folie abgedeckt. Nach 60 min werden aus PET/Harz/PET-Schichtverbund quadratische Muster mit einer Kantenlänge von 10 cm ausgeschnitten. Die Durchhärtung erfolgt bei 80°C über Nacht. Am folgenden Tag erfolgt die visuelle Beurteilung des Films (siehe Tabelle 14).

**Tabelle 14: Visuelle Beurteilung der Entlüftungswirkung**

| Additiv | visuelle Beurteilung | Bewertung |
|---|---|---|
| -- (Nullprobe) | extrem viele Gasblasen | ungenügend |
| Copolymer 6 | wenige Gasblasen, keine Trübung | gut |
| Copolymer 7 | wenige Gasblasen, keine Trübung | gut |

## Patentansprüche

1. Copolymer, dessen Gesamtstruktur als solches und/ oder ein optional vorhandenes, mindestens 10 bivalente Struktureinheiten aufweisendes Segment A der Gesamtstruktur, an bivalenten Struktureinheiten jeweils enthalten
i) 40-90 Mol-% einer Basisstruktureinheit (I),
ii) 10-60 Mol-% einer unpolaren Dicarbonsäurederivatstruktureinheit (II),
iii) 0-50 Mol-% einer polaren Dicarbonsäurederivatstruktureinheit (III),
iv) 0-50 Mol-% einer Sauerstoffgruppenstruktureinheit (IV) sowie
v) 0-40 Mol-% einer Kopfgruppenstruktureinheit (V),
wobei die Basisstruktureinheit (I) durch Umsetzung eines eine olefinische Doppelbindung enthaltenden Monomers (Ix) erzeugt wird sowie keine unter einer der Struktureinheiten (II) bis (V) fallende Spezies umfasst,
die unpolare Dicarbonsäurederivatstruktureinheit (II) vorliegt gemäß einer oder mehrerer der allgemeinen Formeln aus der Gruppe bestehend aus (IIa), (IIb), (IIc) sowie (IId) 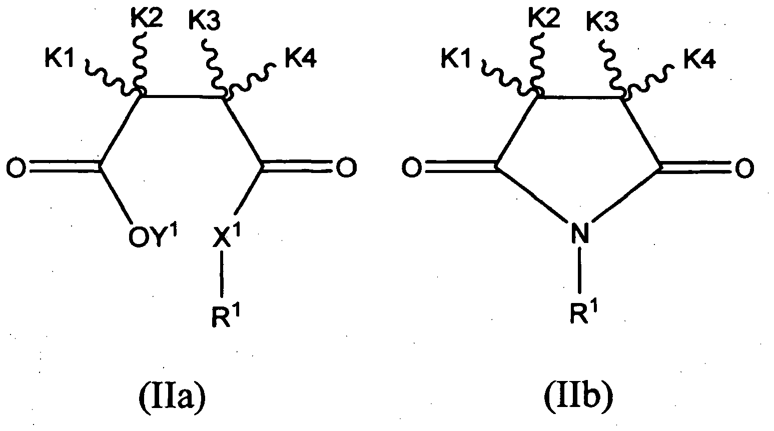 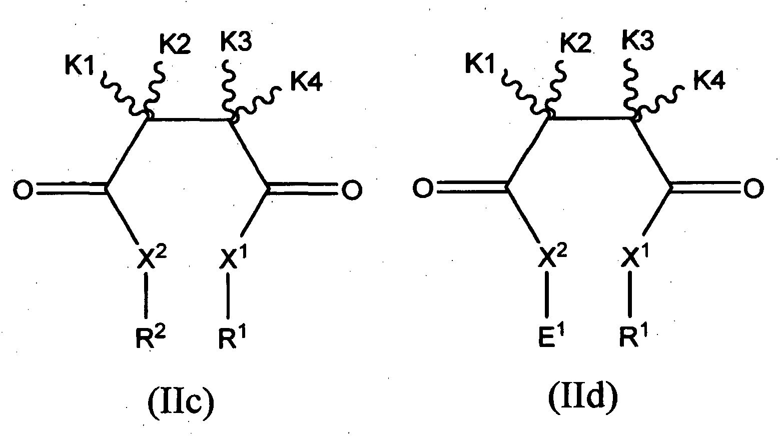 mit
K1, K2, K3 und K4 jeweils gleich oder verschieden sowie jeweils repräsentiert durch Konnektivitätsmöglichkeiten in der Polymerkette, mit der Maßgabe, dass pro allgemeiner Formel genau zwei der Konnektivitätsmöglichkeiten verwirklicht sind,
X¹ und X² jeweils gleich oder verschieden sowie jeweils unabhängig voneinander repräsentiert durch NR^{x} und/oder O
mit R^{x} gleich oder verschieden sowie repräsentiert durch H und/oder einen verzweigten oder unverzweigten C₁-C₁₂-Alkylrest,
Y¹ gleich oder verschieden sowie repräsentiert durch H, einen verzweigten oder unverzweigten C₁-C₂₄-Alkylrest, einen C₆-C₁₈-Arylrest und/oder einen verzweigten oder unverzweigten C₆-C₁₈-Arylalkylrest,
R¹ und R² jeweils gleich oder verschieden sowie jeweils unabhängig voneinander repräsentiert durch einen verzweigten oder unverzweigten, mindestens 50 Kohlenstoffatome aufweisenden gesättigten oder ungesättigten Kohlenwasserstoffrest,
E¹ gleich oder verschieden sowie repräsentiert durch einen verzweigten oder unverzweigten organischen Rest, der insgesamt mindestens vier funktionelle Gruppen enthält, welche in Form von Ethergruppen und/oder Estergruppen vorliegen,
die polare Dicarbonsäurederivatstruktureinheit (III) vorliegt gemäß einer oder mehrerer der allgemeinen Formeln aus der Gruppe bestehend aus (IIIa) sowie (IIIb) 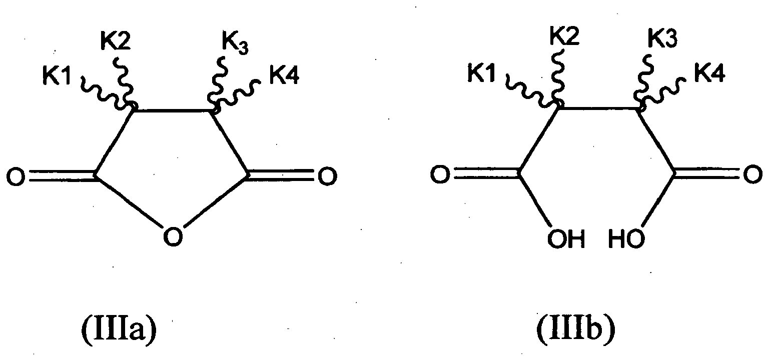 mit
K1, K2, K3 und K4 jeweils gleich oder verschieden sowie jeweils repräsentiert durch Konnektivitätsmöglichkeiten in der Polymerkette, mit der Maßgabe, dass pro allgemeiner Formel genau zwei der Konnektivitätsmöglichkeiten verwirklicht sind,
die Sauerstoffgruppenstruktureinheit (IV) keine unter die Dicarbonsäurederivatstruktureinheit (II) fallende Spezies umfasst und vorliegt gemäß einer oder mehrerer der allgemeinen Formeln aus der Gruppe bestehend aus (IVa), (IVb), (IVc) sowie (IVd) 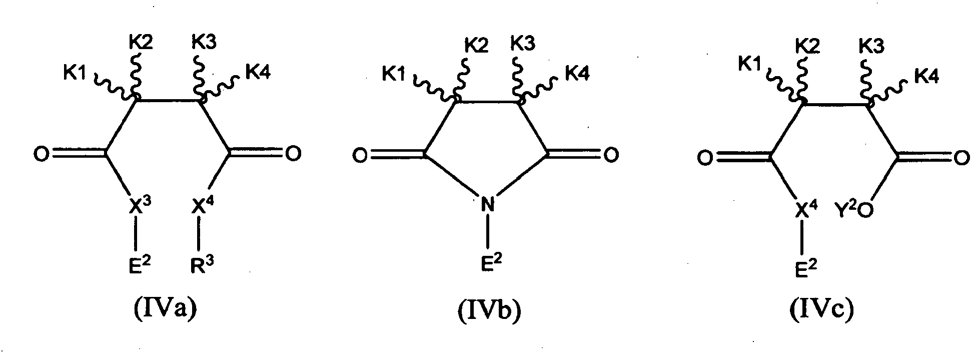 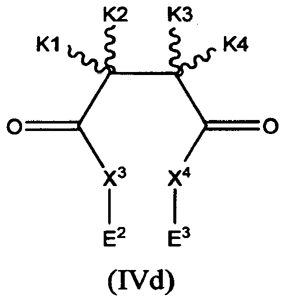 mit
K1, K2, K3 und K4 jeweils gleich oder verschieden sowie jeweils repräsentiert durch Konnektivitätsmöglichkeiten in der Polymerkette, mit der Maßgabe, dass pro allgemeiner Formel genau zwei der Konnektivitätsmöglichkeiten verwirklicht sind,
X³ und X⁴ jeweils gleich oder verschieden sowie jeweils unabhängig voneinander repräsentiert durch NR^{y} und/oder O
mit R^{y} gleich oder verschieden sowie repräsentiert durch H und/oder einen verzweigten oder unverzweigten C₁-C₁₂-Alkylrest,
Y² gleich oder verschieden sowie repräsentiert durch H, einen verzweigten oder unverzweigten C₁-C₂₄-Alkylrest, einen C₆-C₁₈-Arylrest und/oder einen verzweigten oder unverzweigten C₆-C₁₈-Arylalkylrest,
R³ gleich oder verschieden sowie repräsentiert durch eine substituierte oder nicht substituierte verzweigte oder unverzweigte C₁-C₄₀ -Alkylgruppe, durch eine substituierte oder nicht substituierte verzweigte oder unverzweigte C₁-C₄₀ -Alkenylgruppe; durch eine substituierte oder nicht substituierte C₆-C₁₈ - Arylgruppe, eine substituierte oder nicht substituierte verzweigte oder unverzweigte C₇-C₁₈ Arylalkylgruppe und/oder eine substituierte oder nicht substituierte C₄-C₁₀-Cycloalkylgruppe,
E² gleich oder verschieden sowie repräsentiert durch einen verzweigten oder unverzweigten organischen Rest, der insgesamt mindestens vier funktionelle Gruppen enthält, welche in Form von Ethergruppen und/oder Estergruppen vorliegen,
E³ gleich oder verschieden sowie repräsentiert durch einen verzweigten oder unverzweigten organischen Rest, der insgesamt mindestens vier funktionelle Gruppen enthält, welche in Form von Ethergruppen und/oder Estergruppen vorliegen,
und die Kopfgruppenstruktureinheit (V) keine unter einer der Struktureinheiten (II) und (IV) fallende Spezies umfasst und vorliegt gemäß einer oder mehrerer der allgemeinen Formeln aus der Gruppe bestehend aus (Va), (Vb), (Vc) sowie (Vd) 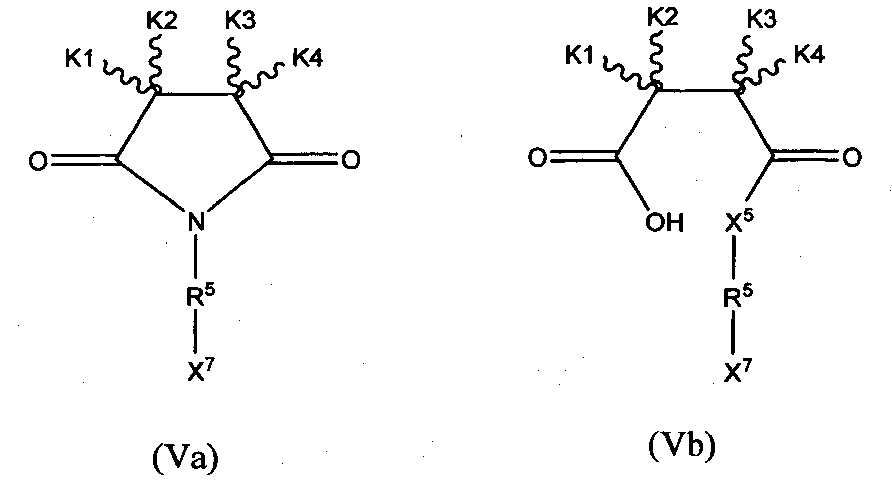 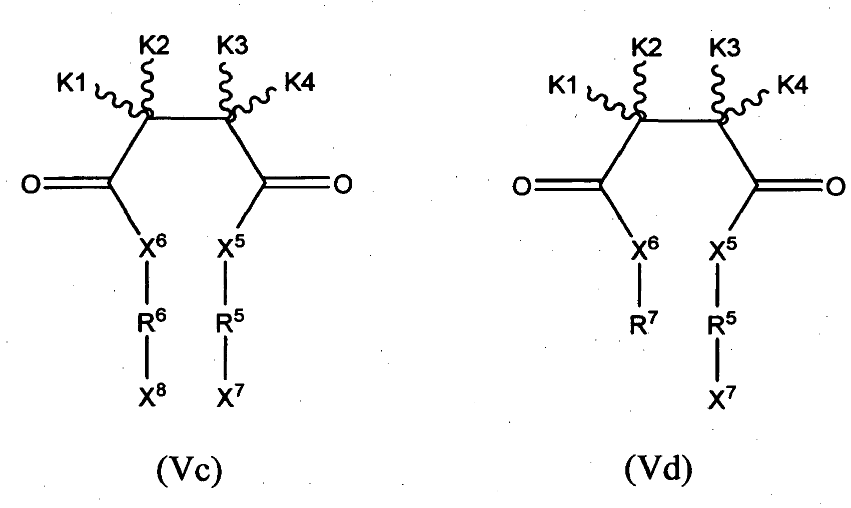 mit
K1, K2, K3 und K4 jeweils gleich oder verschieden sowie jeweils repräsentiert durch Konnektivitätsmöglichkeiten in der Polymerkette, mit der Maßgabe, dass pro allgemeiner Formel genau zwei der Konnektivitätsmöglichkeiten verwirklicht sind,
X⁵ und X⁶ jeweils gleich oder verschieden sowie jeweils unabhängig voneinander repräsentiert durch NR^{z} und/oder O
mit R^{z} gleich oder verschieden sowie repräsentiert durch H und/oder einen verzweigten oder unverzweigten C₁-C₁₂-Alkylrest,
X⁷ und X⁸ jeweils gleich oder verschieden sowie jeweils unabhängig voneinander repräsentiert durch eine Phosphorsäureestergruppe, eine Phosphonsäureestergruppe, eine N,N-disubstituierte Aminogruppe der allgemeinen Formel (VA) 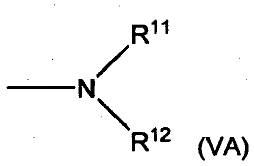 und/oder eine quartäre Ammoniumgruppe der allgemeinen Formel (VB) 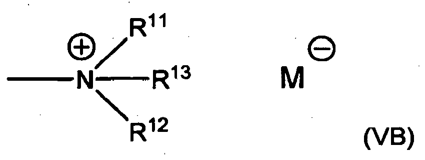 mit R¹¹, R¹² und R¹³ jeweils gleich oder verschieden sowie jeweils unabhängig voneinander repräsentiert durch eine substituierte oder nicht substituierte verzweigte oder unverzweigte C₁-C₂₄ -Alkylgruppe, durch eine substituierte oder nicht substituierte C₄-C₁₀ - Cycolalkylgruppe, durch eine substituierte oder nicht substituierte C₆-C₁₈ -Arylgruppe und/ oder eine substituierte oder nicht substituierte verzweigte oder unverzweigte C₇-C₁₈ -Arylalkylgruppe, wobei R¹¹ und R¹² gemeinsam miteinander eine substituierte oder nicht substituierte C₄-C₁₀ - Cycolalkylgruppe ausbilden können,
und M- gleich oder verschieden sowie repräsentiert durch ein Carboxylat, Phosphat, einen Phosphatester, ein Sulfat und/oder ein Halogenid,
R⁵ und R⁶ jeweils gleich oder verschieden sowie jeweils unabhängig voneinander repräsentiert durch eine substituierte oder nicht substituierte verzweigte oder unverzweigte C₁-C₂₄ -Alkylengruppe und/ oder eine substituierte oder nicht substituierte C₆-C₁₈-Arylengruppe,
R⁷ gleich oder verschieden sowie repräsentiert durch eine substituierte oder nicht substituierte verzweigte oder unverzweigte C₁-C₄₀ -Alkylgruppe, durch eine substituierte oder nicht substituierte verzweigte oder unverzweigte C₁-C₄₀ -Alkenylgruppe; durch eine substituierte oder nicht substituierte C₆-C₁₈ - Arylgruppe, eine substituierte oder nicht substituierte verzweigte oder unverzweigte C₇-C₁₈ -Arylalkylgruppe und/oder eine substituierte oder nicht substituierte C₄-C₁₀-Cycloalkylgruppe.

2. Copolymer nach Anspruch 1, **dadurch gekennzeichnet, dass** dessen Gesamtstruktur als solches und/oder das optional vorhandene Segment A an bivalenten Struktureinheiten jeweils enthalten
i) 30-75, bevorzugt 35-70 Mol-% der Basisstruktureinheit (I),
ii) 15-55, bevorzugt 17-50 Mol-% der unpolaren Dicarbonsäurederivatstruktureinheit (II),
iii) 0-30, bevorzugt 0-10 Mol-% der polaren Dicarbonsäurederivatstruktureinheit (III),
iv) 0-35, bevorzugt 0-30 Mol-% der Sauerstoffgruppenstruktureinheit (IV) sowie
v) 0-20, bevorzugt 0-10 Mol-% der Kopfgruppenstruktureinheit (V).

3. Copolymer nach Anspruch 1 oder 2, **dadurch gekennzeichnet, dass** das die Basisstruktureinheit (I) erzeugende, eine olefinische Doppelbindung enthaltende Monomer (Ix) ausgewählt ist aus einem oder mehreren der Monomere der Gruppe bestehend aus Alkyl(meth)acrylaten, Alkenyl(meth)acrylaten von geradkettigen, verzweigten oder cycloaliphatischen Mono-Alkoholen mit 1 bis 22 Kohlenstoffatomen oder von geradkettigen oder verzweigten aromatischen oder gemischt aromatischaliphatischen Monoalkoholen mit 1 bis 22 Kohlenstoffatomen, Mono(meth)acrylaten von oligomeren oder polymeren Ethern, (Meth)acrylate von halogenierten Alkoholen; oxiranhaltige (Meth)acrylate, Styrol, substituierte Styrole, α-Olefine, Vinylether, Allylether; Methacrylnitril, Acrylnitril; Vinylgruppen aufweisende cycloaliphatische Heterocyclen mit wenigstens einem N-Atom als Ringglied, Vinylester von Monocarbonsäuren mit 1 bis 20 Kohlenstoffatomen, N-Alkyl- und N,N-Dialkylsubstituierte Acrylamide mit geradkettigen, verzweigten oder cycloaliphatischen Alkylgruppen mit 1 bis 22 Kohlenstoffatomen, ethylenisch ungesättigte Monomere mit mindestens einer carbonsauren, phosphonsauren, phosphorsauren und/oder sulfonsauren Gruppe und ungesättigten Fettsäuren.

4. Copolymer nach einem der Ansprüche 1 bis 3, **dadurch gekennzeichnet, dass** mindestens 60 Mol-%, bevorzugt mindestens 90 Mol-% der der Basisstruktureinheit (I) zugehörigen Struktureinheiten durch Umsetzung von Styrol erzeugt werden.

5. Copolymer nach einem der Ansprüche 1 bis 4, **dadurch gekennzeichnet, dass** R¹ und R² jeweils gleich oder verschieden sind und jeweils unabhängig voneinander repräsentiert werden durch einen verzweigten oder unverzweigten Alkylrest und/ oder einen verzweigten oder unverzweigten Alkenylrest, die jeweils bevorzugt vorliegen in Form von Polyolefinresten, welche jeweils auf 2 - 8 Kohlenstoffatome enthaltenden Olefinen basieren.

6. Copolymer nach einem der Ansprüche 1 bis 5, **dadurch gekennzeichnet, dass** R¹ und R² jeweils gleich oder verschieden sind und jeweils unabhängig voneinander repräsentiert werden durch einen Polyisobutylenrest und/oder einen nichthydrierten, teilhydrierten und/ oder vollständig hydrierten Polybutandienrest und/oder einen nichthydrierten, teilhydrierten und/ oder vollständig hydrierten Polyisoprenrest.

7. Copolymer nach einem der Ansprüche 1 bis 6, **dadurch gekennzeichnet, dass** insgesamt mindestens 60 Mol-%, bevorzugt mindestens 80 Mol-% der Reste, welche als R¹ und/oder R² vorliegen, durch einen 50 - 200, bevorzugt 60 -120 Kohlenstoffatome aufweisenden Polyisobutylenrest repräsentiert werden.

8. Copolymer nach einem der Ansprüche 1 bis 7, **dadurch gekennzeichnet, dass** dessen Gesamtstruktur als solches und/ oder das optional vorhandene Segment A an bivalenten Struktureinheiten 0,1-10 Mol% der polaren Dicarbonsäurederivatstruktureinheit (III) jeweils enthalten.

9. Copolymer nach einem der Ansprüche 1 bis 8, **dadurch gekennzeichnet, dass** dessen Gesamtstruktur als solches und/ oder das optional vorhandene Segment A an bivalenten Struktureinheiten 1-10 Mol-% der Sauerstoffgruppenstruktureinheit (IV) jeweils aufweisen.

10. Copolymer nach Anspruch 9, **dadurch gekennzeichnet, dass** E² und E³ gleich oder verschieden sind und jeweils 4-300, bevorzugt 10-100 Ethersauerstoffatome enthalten.

11. Copolymer nach einem der Ansprüche 1 bis 10, **dadurch gekennzeichnet, dass** dessen Gesamtstruktur als solches und/ oder das optional vorhandene Segment A an bivalenten Struktureinheiten 1-10 Mol-% der Kopfgruppenstruktureinheit (V) jeweils enthalten.

12. Copolymer nach einem der Ansprüche 1 bis 11, dessen Gesamtstruktur einerseits das Segment A sowie andererseits wenigstens ein weiteres bivalente Struktureinheiten aufweisendes Segment B enthält, wobei das Segment A als ein Block A sowie das Segment B als ein an Block A gebundener Block B vorliegt, welcher sich gemäß der Konzentration der bivalenten Struktureinheiten (I) - (V) und/oder bezüglich der Art der bivalenten Struktureinheiten von Block A unterscheidet.

13. Copolymer nach einem der Ansprüche 1 bis 11 enthaltend 10 - 500, bevorzugt 15 - 300 Struktureinheiten, welche aus der Gruppe der bivalenten Struktureinheiten (I) bis (V) ausgewählt sind.

14. Herstellung eines Copolymers nach einem der Ansprüche 1 bis 13, **dadurch gekennzeichnet, dass** in einem vorherigen Schritt ein Copolymervorprodukt durch Polymerisation hergestellt wird, wobei in einem nachherigen Schritt durch Pfropfungsreaktionen die unpolare Dicarbonsäurederivatstruktureinheit (II) und gegebenenfalls jeweils die Sauerstoffgruppenstruktureinheit (IV) und/ oder die Kopfgruppenstruktureinheit (V) ausgebildet werden.

15. Herstellung nach Anspruch 14, **dadurch gekennzeichnet, dass** das Copolymervorprodukt aufweist ein zahlenmittleres Molekulargewicht von 600 - 25.000 g/mol, bevorzugt 800 - 10.000 g/mol, besonders bevorzugt 1.000 - 5.000 g/mol.

16. Komposition, herstellbar durch Mischen von mindestens zwei Komponenten, die jeweils bei der Mischtemperatur in flüssiger Form vorliegen, wobei bezogen auf das Gesamtgewicht der Komposition als eine stabilisierende dritte Komponente 0,1-10 Gew.-% eines Copolymers gemäß einem der Ansprüche 1 bis 13 als Phasenvermittler eingesetzt wird.

17. Komposition nach Anspruch 16, welche als Emulsion vorliegt und enthält 0,1 bis 10 Gew.-% eines Copolymers gemäß einem der Ansprüche 1 bis 13, 0,1 bis 50 Gew.-% eines Homo- oder Copolymers von Butadien sowie 10 bis 70 Gew.% eines ethylenisch-ungesättigten polymeren Harzes, welches in einem ethylenisch-ungesättigten Reaktivverdünner gelöst sein kann, wobei der Anteil der Butadienstruktureinheiten im Copolymer von Butadien bevorzugt mindestens 33, besonders bevorzugt mindestens 50 Mol-% beträgt und das ethylenisch-ungesättigte polymere Harz bevorzugt als ungesättigter Polyester oder ungesättigter Vinylester vorliegt, die jeweils bevorzugt in Styrol gelöst vorliegen.

18. Dispersion, welche ein Dispergiermedium sowie dispergierten partikulären Feststoff enthält, der bevorzugt in Form eines anorganischen Füllstoffs, und/oder in Form eines anorganischen oder organischen Pigments und/oder in Form von Kohlenstoff-Nanoröhren und/oder in Form von Graphenen, vorliegt, wobei bezogen auf das Gesamtgewicht der Dispersion 0,1-10 Gew.-% eines Copolymers gemäß einem der Ansprüche 1 bis 13 als Netz- und Dispergiermittel eingesetzt wird.

19. Verwendung eines Copolymers nach einem der Ansprüche 1 bis 13 als Phasenvermittler, als Entlüfter-Additiv oder als Netz- und Dispergiermittel.

## Claims

1. Copolymer, whose overall structure as such and/or an optionally present segment A of the overall structure with at least 10 bivalent structural units, in terms of bivalent structural units, includes in each case
i) 40-90 mol% of a basic structural unit (I),
ii) 10-60 mol% of a non-polar dicarbonic acid derivative structural unit (II).
iii) 0-50 mol% of a polar dicarbonic acid derivative structural unit (III),
iv) 0-50 mol% of a structural unit oxygen group (IV) and
v) 0-40 mol% of a structural unit head group (V),
wherein the base structural unit (I) is produced by reacting a monomer containing an olefinic double bond (Ix) and does not include any species falling under the structural units (II) to (V)
the nonpolar dicarbonic acid derivative structural unit (II) is present in accordance with one or more of the formulas selected from the group consisting of (IIa), (IIb), (IIc) and (IId) 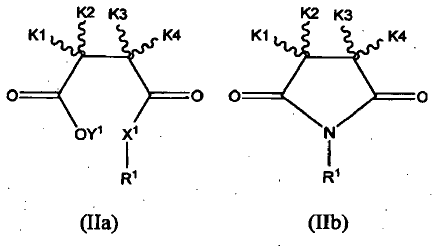 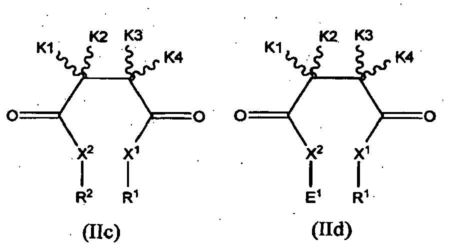 such that
K1, K2, K3 and K4 are in each case the same or different and each is represented by connectivity options in the polymer chain, on the proviso that for each general formula exactly two connectivity options are implemented,
X¹ and X² are the same or different and each independently represented by NR^{x} and/or O are identical or different with R^{x} and are represented by H and/or a branched or unbranched C₁-C₁₂ alkyl;
Y¹ is the same or different and is represented by H, a branched or unbranched C₁-C₂₄-alkyl, a C₆-C₁₈-aryl group and/or a branched or unbranched C₆-C₁₈ arylalkyl,
R¹ and R² are the same or different and each independently represented by a branched or unbranched saturated or unsaturated hydrocarbon radical, with at least 50 carbon atoms,
E¹ is the same or different and represented by a branched or unbranched organic radical which contains at least four functional groups which are present in the form of ether and/or ester groups,
the polar dicarbonic acid derivative structural unit (III) is present in accordance with one or more of the formulas selected from the group consisting of (IIIa) and (IIIb) 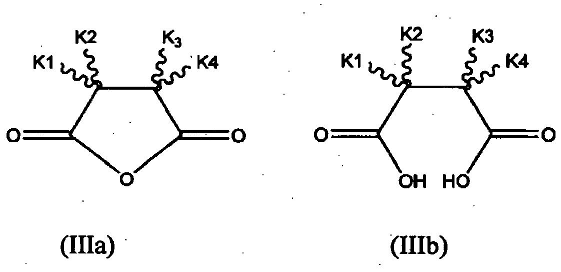 such that
K1, K2, K3 and K4 are the same or different and each is represented by connectivity options in the polymer chain, on the proviso that per the general formula exactly two connectivity options are implemented,
the oxygen group of the structural unit (IV) does not include species falling within the dicarbonic acid derivative structural unit (II) and is present in accordance with one or more of the formulas selected from the group consisting of (IVa), (IVb), (IVc) and (IVd) 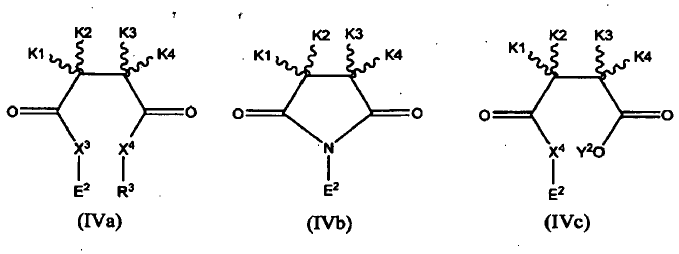 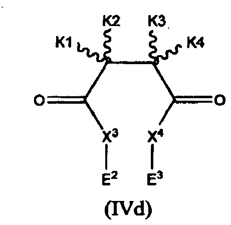 such that
K1, K2, K3 and K4 are the same or different and each is represented by connectivity options in the polymer chain, on the proviso that for each general formula exactly two connectivity options are implemented,
X³ and X⁴ are the same or different and each independently represented by NR^{y}, and/or O and R^{y} are identical or different and are represented by H and/or a branched or unbranched C₁-C₁₂-alkyl;
Y² is the same or different and is represented by H, a branched or unbranched C₁-C₂₄-alkyl, C₆-C₁₈-aryl group and/or a branched or unbranched C₆-C₁₈-arylalkyl,
R³ is identical or different and is represented by a substituted or unsubstituted, branched or unbranched C₁-C₄₀ alkyl group, by a substituted or unsubstituted, branched or unbranched C₁-C₄₀ alkenyl group, by a substituted or unsubstituted C₆-C₁₈-aryl group, a substituted or unsubstituted, branched or unbranched C₇-C₁₈-arylalkyl group and/or a substituted or unsubstituted C₄-C₁₀-cycloalkyl group,
E² is identical or different and is represented by a branched or unbranched organic radical which contains at least four functional groups which are present in the form of ether and/or ester groups,
E³ is identical or different and is represented by a branched or unbranched organic radical which contains at least four functional groups which are present in the form of ether and/or ester groups, and the head group of the structural unit (V) does comprise any species falling within the structural units (II) and (IV) and is present in accordance with one or more of the formulas selected from the group consisting of (Va), (Vb), (Vc) and (Vd) 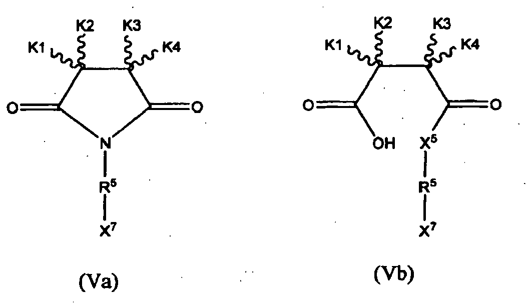 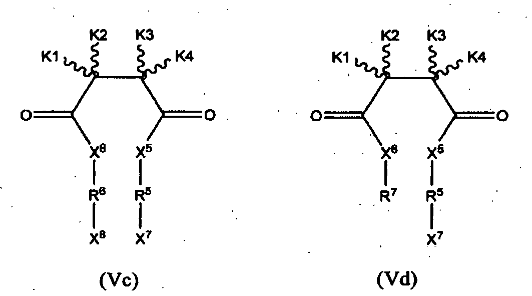 such that
K1, K2, K3 and K4 are the same or different and each is represented by connectivity options in the polymer chain, on the proviso that for each general formula exactly two connectivity options are implemented,
X⁵ and X⁶ are the same or different and each independently represented by NR^{z} and/or O such that R^{z} is the same or different and is represented by H and/or a branched or unbranched C₁-C₁₂-alkyl,
X⁷ and X⁸ are the same or different and each independently represented by a phosphoric acid ester group, a phosphonic acid, a N, N-disubstituted amino group of the general formula (VA) 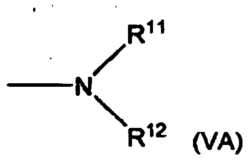 and/or a quaternary ammonium group of the general formula (VB) 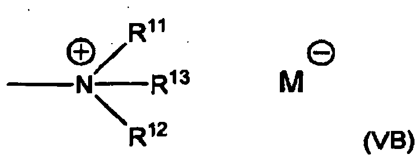 such that R¹¹, R¹² and R¹³ are the same or different and each independently represented by a substituted or unsubstituted, branched or unbranched C₁-C₂₄-alkyl group, by a substituted or unsubstituted C₄-C₁₀-cycolalkyl group, by a substituted or non-substituted C₆-C₁₈-aryl group and/or a substituted or unsubstituted, branched or unbranched C₇-C₁₈-arylalkyl group, wherein R¹¹ and R¹² together with each a substituted or unsubstituted C₄-C₁₀-can form a cycolalkyl group,
and M" is the same or different and is represented by a carboxylate, phosphate, a phosphate ester, a sulphate and/or a halide,
R⁵ and R⁶ are each identical or different and are each independently represented by a substituted or unsubstituted, branched or unbranched C₁-C₂₄-alkylene group and/or a substituted or non-substituted C₆-C₁₈-arylene,
R⁷ are identical or different and are represented by a substituted or unsubstituted, branched or unbranched C₁-C₄₀-alkyl group, by a substituted or unsubstituted, branched or unbranched C₁-C₄₀-alkenyl group; by a substituted or unsubstituted C₆-C₁₈-aryl group, a substituted or unsubstituted, branched or unbranched C₇-C₁₈-arylalkyl group and/or a substituted or unsubstituted C₄-C₁₀-cycloalkyl group.

2. A copolymer according to claim 1, **characterised in that** the overall structure comprises as such and/or the optionally present segment A in terms of bivalent structural units in each case
i) 30-75, preferably 35-70 mol% of the basic structural unit (I),
ii) 15-55, preferably 17-50 mol% of the non-polar dicarbonic acid derivative structural unit (II),
iii) 0-30, preferably 0-10 mol% of the polar dicarbonic acid derivative structural unit (III),
iv) 0-35, preferably 0-30 mol% of the oxygen group structural unit (IV) and
v) 0-20, preferably 0-10 mol% of the head group structural unit (V).

3. A copolymer according to claim 1 or 2, **characterised in that** the monomer (Ix) forming the basic structural unit (I), containing an olefinic double bond, is selected from one or more of the monomers of the group consisting of alkyl (meth) acrylates, alkenyl (meth) acrylates of straight-chain, branched or cycloaliphatic monoalcohols having 1 to 22 carbon atoms or of straight-chain or branched aromatic or mixed aromatic-aliphatic monoalcohols having 1 to 22 carbon atoms, mono (meth) acrylates of oligomeric or polymeric ethers, (meth) acrylates of halogenated alcohols; oxirane-containing (meth) acrylates, styrene, substituted styrenes, alpha-olefins, vinyl ethers, allyl ethers; methacrylonitrile, acrylonitrile; vinyl group-containing cycloaliphatic heterocycles having at least one N atom as ring member, vinyl esters of monocarboxylic acids having 1 to 20 carbon atoms, N-alkyl and N, N-dialkyl-substituted acrylamides having straight-chain, branched or cycloaliphatic alkyl of 1 to 22 carbon atoms, ethylenically unsaturated monomers with at least one carboxylic acid, phosphonic-acid, phosphoric acid and/or sulfonic acid group and unsaturated fatty acids.

4. A copolymer according to any one of claims 1 to 3, **characterised in that** at least 60 mol%, preferably at least 90 mol% of the structural units corresponding to the basic structural unit (I) are produced by the reaction of styrene.

5. A copolymer according to any one of claims 1 to 4, **characterised in that** R¹ and R² are the same or different and each is represented independently by a branched or unbranched alkyl group and/or a branched or unbranched alkenyl group, each preferably in the form of a polyolefin residue, which are based in each case on olefins containing 2-8 carbon atoms.

6. A copolymer according to any one of claims 1 to 5, **characterised in that** R¹ and R² are the same or different and are each independently represented by a polyisobutylene and/or a non-hydrogenated, partially hydrogenated and/or fully hydrogenated polybutandiene residue and/or a non-hydrogenated, partially hydrogenated and/or fully hydrogenated polyisoprene residue.

7. A copolymer according to any one of claims 1 to 6, **characterised in that** altogether at least 60 mol%, preferably at least 80 mol% of the residues, which when R¹ and/or R² are present, are represented by a polyisobutylene residue with 50 - 200, preferably from 60 to 120 carbon atoms.

8. A copolymer according to any one of claims 1 to 7, **characterised in that** the overall structure itself and/or the optionally present segment A in terms of bivalent structural units contain 0.1-10 mol% of the polar dicarbonic acid derivative structural unit (III) in each case.

9. A copolymer according to any one of claims 1 to 8, **characterised in that** the overall structure itself and/or the optionally present segment A in terms of bivalent structural units has 1-10 mol% of the oxygen group of the structural unit (IV) in each case.

10. A copolymer according to claim 9, wherein E² and E³ are the same or different and each contains 4-300, preferably 10-100, ether oxygen atoms.

11. A copolymer according to any one of claims 1 to 10, **characterised in that** the overall structure itself and/or the optionally present segment A contains in terms of bivalent structural units 1-10 mol% of the head group structural unit (V) in each case.

12. A copolymer according to any one of claims 1 to 11, whose overall structure includes on the one hand the segment A, and on the other hand at least one further segment B with bivalent structural units wherein segment A is present as a block A and the segment B as a block B bound to block A, which differs in accordance with the concentration of the bivalent structural units (I) - (V) and/or concerning the nature of the bivalent structural units of block A.

13. A copolymer according to any one of claims 1 to 11 containing from 10 to 500, preferably from 15 to 300, structural units which are selected from the group of bivalent structural units (I) to (V).

14. Preparation of a copolymer according to any one of claims 1 to 13, **characterised in that** in a previous step a copolymer preliminary product is prepared by polymerizing, in an ex post step by grafting the non-polar dicarbonic acid derivative structural unit (II) and optionally in each case the oxygen group of the structural unit (IV) and/or the head group structural unit (V) are formed.

15. Preparation according to claim 14, **characterised in that** the copolymer preliminary product has a statistical average molecular weight of 600-25,000 g/mol, preferably 800 -10,000 g/mol, more preferably 1,000 -5,000 g/mol.

16. Composition which can be prepared by mixing at least two components which are each present at the mixing temperature in liquid form, based on the total weight of the composition as a stabilising third component, in which 0.1-10 wt.-% of a copolymer according to any of claims 1 to 13 is used as a phase mediator.

17. Composition according to claim 16, which is present as emulsion and contains from 0.1 to 10 wt.-% of a copolymer according to any one of claims 1 to 13, 0.1 to 50 wt.-% of a homo- or copolymer of butadiene, and 10 to 70.% by weight of an ethylenically unsaturated polymeric resin, which may be dissolved in an ethylenically-unsaturated reactive diluent, wherein the amount of the copolymer of butadiene has preferably at least 33 butadiene structural units, more preferably at least 50 mol%, and the ethylenically unsaturated polymeric resin is preferably present as unsaturated polyester or vinyl ester of unsaturated present each preferably dissolved in styrene.

18. Dispersion containing a dispersing medium and dispersed particulate solid which is preferably in the form of an inorganic filler, and/or in the form of an inorganic or organic pigment and/or in the form of carbon nanotubes and/or in the form of graphene, such that with respect on the total weight of the dispersion 0.1 to 10 wt.-% of a copolymer according to any of claims 1 to 13 is used as a wetting and dispersing agent.

19. Use of a copolymer according to one of claims 1 to 13 as a compatibilizer, as an additive or deaerator or as a wetting and dispersing agent.

## Revendications

1. Copolymère, dont la structure générale en tant que telle et/ou un segment A de la structure générale présent en option et comprenant au moins 10 motifs structuraux divalents contiennent respectivement au niveau des motifs structuraux divalents :
i) 40 à 90 % en moles d'un motif structural de base (I),
ii) 10 à 60 % en moles d'un motif structural non polaire type dérivé d'acide dicarboxylique (II),
iii) 0 à 50 % en moles d'un motif structural polaire type dérivé d'acide dicarboxylique (III),
iv) 0 à 50 % en moles d'un motif structural type groupe oxygène (IV), et
v) 0 à 40 % en moles d'un motif structural type groupe de tête (V),
dans lequel le motif structural de base (I) est obtenu par conversion d'un monomère (ix) porteur d'une double liaison oléfine et est dépourvu de toute espèce figurant parmi les motifs structuraux (II) à (V),
le motif structural non polaire type dérivé d'acide dicarboxylique (II) se présente selon une ou plusieurs des formules générales suivantes du groupe constitué de (IIa), (IIb), (IIc) et (IId) 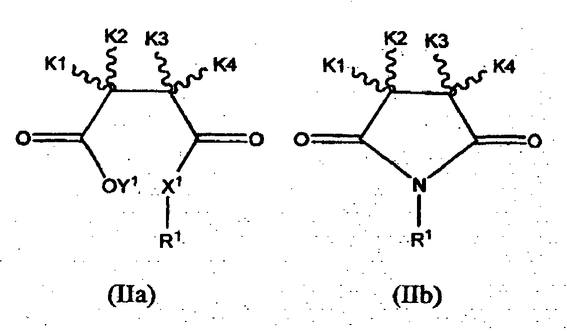 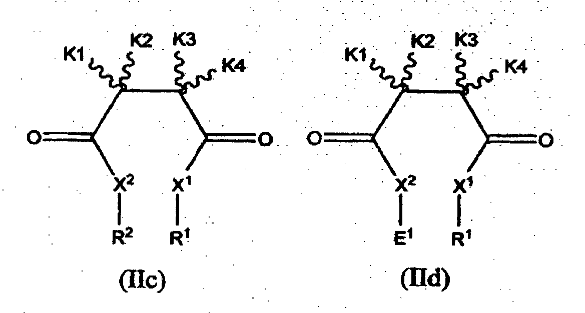 dans lesquelles
K1, K2, K3 et K4 sont respectivement identiques ou différents et représentent chacun des options de connectivité dans la chaîne polymère, sous réserve que, pour chaque formule générale, exactement deux des options de connectivité soient concrétisées,
X¹ et X² sont respectivement identiques ou différents et représentent indépendamment l'un de l'autre NR^{x} et/ou O,
chaque R^{x} étant respectivement identique ou différent et représentant H et/ou un résidu alkyle en C₁ à C₁₂ ramifié ou non ramifié,
chaque Y¹ est respectivement identique ou différent et représente H, un résidu alkyle en C₁ à C₂₄ ramifié ou non ramifié, un résidu aryle en C₆ à C₁₈ et/ou un résidu arylalkyle en C₆ à C₁₈ ramifié ou non ramifié,
R¹ et R² sont respectivement identiques ou différents et représentent indépendamment l'un de l'autre un résidu hydrocarboné saturé ou insaturé, ramifié ou non ramifié, comprenant au moins 50 atomes de carbone, chaque E¹ est respectivement identique ou différent et représente un résidu organique ramifié ou non ramifié, comprenant en totalité au moins quatre groupes fonctionnels qui se présentent sous forme de groupes éther et/ou de groupes ester,
le motif structural polaire type dérivé d'acide dicarboxylique (III) est défini par une ou plusieurs des formules générales suivantes du groupe constitué de (IIIa) et (IIIb), 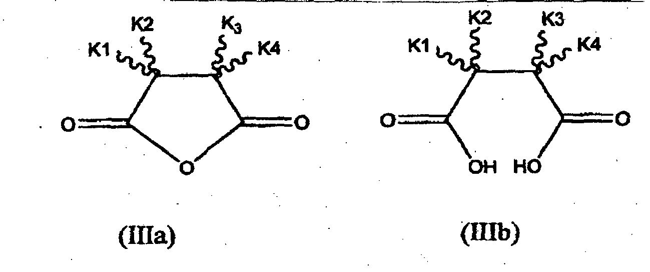 dans lesquelles
K1, K2, K3 et K4 sont respectivement identiques ou différents et représentent chacun des options de connectivité dans la chaîne polymère, sous réserve que, pour chaque formule générale, exactement deux des options de connectivité soient concrétisées,
le motif structural type groupe oxygène (IV) est dépourvu de toute espèce appartenant au motif structural type dérivé d'acide dicarboxylique (II) et est défini par une ou plusieurs des formules générales suivantes du groupe constitué de (IVa), (IVb), (IVc) et (IVd) 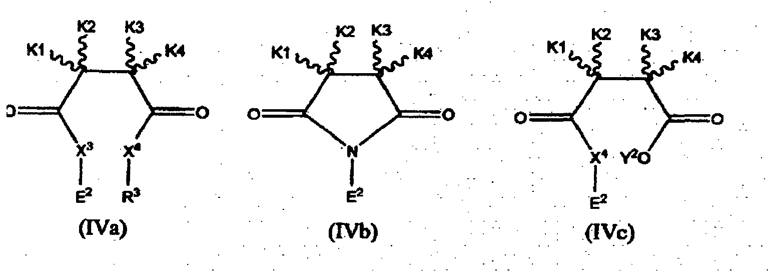 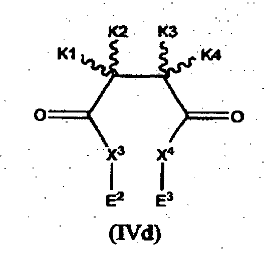 dans lesquelles
K1, K2, K3 et K4 sont respectivement identiques ou différents et représentent chacun des options de connectivité dans la chaîne polymère, sous réserve que, pour chaque formule générale, exactement deux des options de connectivité soient concrétisées,
X³ et X⁴ sont respectivement identiques ou différents et représentent indépendamment l'un de l'autre NR^{y} et/ou O,
chaque R^{y} étant respectivement identique ou différent et représentant H et/ou un résidu alkyle en C₁ à C₁₂, ramifié ou non ramifié,
chaque Y² est respectivement identique ou différent et représente H, un résidu alkyle en C₁ à C₂₄ ramifié ou non ramifié, un résidu aryle en C₆ à C₁₈ et/ou un résidu arylalkyle en C₆ à C₁₈ ramifié ou non ramifié,
chaque R³ est respectivement identique ou différent et représente un groupe alkyle en C₁ à C₄₀ ramifié ou non ramifié, substitué ou non substitué, un groupe alcényle en C₁ à C₄₀ ramifié ou non ramifié, substitué ou non substitué, un groupe aryle en C₆ à C₁₈ substitué ou non substitué, un groupe arylalkyle en C₇ à C₁₈ substitué ou non substitué, ramifié ou non ramifié et/ou un groupe cycloalkyle en C₄ à C₁₀ substitué ou non substitué,
chaque E² est identique ou différent et représente un résidu organique ramifié ou non ramifié comprenant en totalité au moins quatre groupes fonctionnels, qui se présentent sous forme de groupes éther et/ou de groupes ester,
chaque E³ est identique ou différent et représente un résidu organique ramifié ou non ramifié comprenant en totalité au moins quatre groupes fonctionnels qui se présentent sous forme de groupes éther et/ou de groupes ester,
et le motif structural type groupe de tête (V) est dépourvu de toute espèce figurant parmi les motifs structuraux (II) et (IV) et est défini par une ou plusieurs des formules générales suivantes du groupe constitué de (Va), (Vb), (Vc) et (Vd) 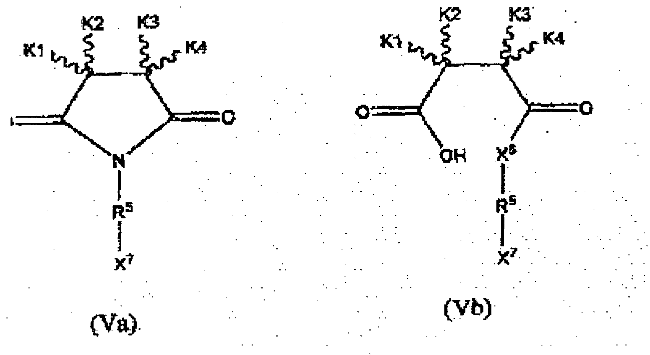 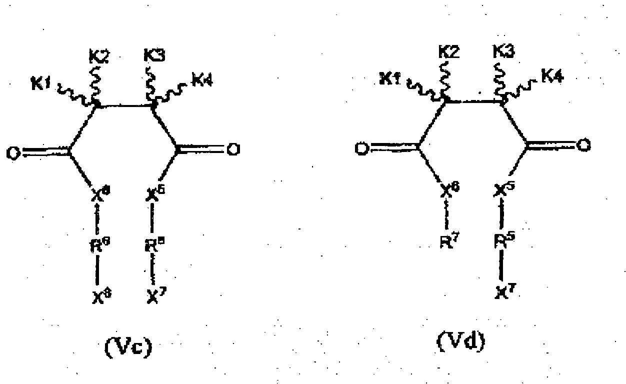 dans lesquelles
K1, K2, K3 et K4 sont respectivement identiques ou différents et représentent chacun des options de connectivité dans la chaîne polymère, sous réserve que, pour chaque formule générale, exactement deux des options de connectivité soient concrétisées,
X⁵ et X⁶ sont respectivement identiques ou différents et représentent indépendamment l'un de l'autre NR^{z} et/ou O,
chaque R^{z} étant respectivement identique ou différent et représentant H et/ou un résidu alkyle en C₁ à C₁₂ ramifié ou non ramifié,
X⁷ et X⁸ sont respectivement identiques ou différents et représentent indépendamment l'un de l'autre un groupe ester d'acide phosphorique, un groupe ester d'acide phosphonique, un groupe amino N,N-disubstitué de formule générale (VA) 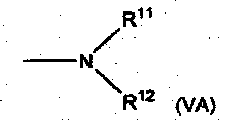 et/ou un groupe ammonium quaternaire de formule générale (VB) 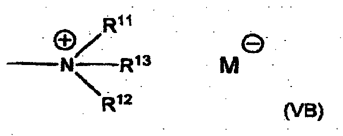 dans laquelle R¹¹, R¹² et R¹³ sont respectivement identiques ou différents et représentent indépendamment les uns des autres un groupe alkyle en C₁ à C₂₄, ramifié ou non ramifié, substitué ou non substitué, un groupe cycloalkyle en C₄ à C₁₀ substitué ou non substitué, un groupe aryle en C₆ à C₁₈ substitué ou non substitué et/ou un groupe arylalkyle en C₇ à C₁₈ ramifié ou non ramifié, substitué ou non substitué, R¹¹ et R¹² pouvant former conjointement un groupe cycloalkyle en C₄ à C₁₀ substitué ou non substitué, et chaque M- est respectivement identique ou différent et représente un carboxylate, un phosphate, un ester de phosphate, un sulfate et/ou un halogénure,
R⁵ et R⁶ sont respectivement identiques ou différents et représentent indépendamment l'un de l'autre un groupe alkylène en C₁ à C₂₄ ramifié ou non ramifié, substitué ou non substitué et/ou un groupe arylène en C₆ à C₁₈ substitué ou non substitué,
chaque R⁷ est respectivement identique ou différent et représente un groupe alkyle en C₁ à C₄₀ ramifié ou non ramifié, substitué ou non substitué, un groupe alcényle en C₁ à C₄₀ ramifié ou non ramifié, substitué ou non substitué, un groupe aryle en C₆ à C₁₈ substitué ou non substitué, un groupe arylalkyle en C₇ à C₁₈ ramifié ou non ramifié, substitué ou non substitué et/ou un groupe cycloalkyle en C₄ à C₁₀ substitué ou non substitué.

2. Copolymère selon la revendication 1, **caractérisé en ce que** sa structure générale en tant que telle et/ou le segment A présent en option comprennent au niveau des motifs structuraux divalents, respectivement :
i) 30 à 75% en moles, de préférence 35 à 70% en moles, du motif structural de base (I),
ii) 15 à 55% en moles, de préférence 17 à 50 % en moles, du motif structural non polaire type dérivé d'acide dicarboxylique (II),
iii) 0 à 30 % en moles, de préférence 0 à 10 % en moles, du motif structural polaire type dérivé d'acide dicarboxylique (III),
iv) 0 à 35 % en moles, de préférence 0 à 30 % en moles, du motif structural type groupe oxygène (IV), et
v) 0 à 20 % en moles, de préférence 0 à 10% en moles, du motif structural type groupe de tête (V).

3. Copolymère selon la revendication 1 ou 2, **caractérisé en ce que** le monomère (ix) porteur d'une double liaison oléfine et produisant le motif structural de base (I) est sélectionné parmi un ou plusieurs des monomères du groupe constitué par des (méth)acrylates d'alkyle, des (méth)acrylates d'alcényle d'alcools monovalents à chaîne linéaire, ramifiée ou cycloaliphatiques et comprenant 1 à 22 atomes de carbone, ou d'alcools monovalents à chaîne linéaire ou ramifiée, aromatiques ou aromatiques-aliphatiques et comprenant 1 à 22 atomes de carbone, des mono(méth)acrylates d'éthers oligomères ou polymères, des (méth)acrylates d'alcools halogénés, des (méth)acrylates contenant de l'oxyde d'éthylène, du styrène, des styrènes substitués, des alpha-oléfines, de l'éther de vinyle, de l'allyléther, du méthacrylonitrile, de l'acrylonitrile, des hétérocycles cycloaliphatiques comprenant des groupes vinyle et ayant au moins un atome d'azote en tant qu'élément cyclique, de l'ester de vinyle d'acides monocarboxyliques comportant 1 à 20 atomes de carbone, des acrylamides N-alkyl- et N,N-dialkylsubstitués ayant des groupes alkyl linéaires, ramifiés ou cycloaliphatiques comportant 1 à 22 atomes de carbone, des monomères insaturés en éthylène comprenant au moins un groupe acide carboxylique, acide phosphonique, acide phosphorique et/ou acide sulfonique, et des acides gras insaturés.

4. Copolymère selon l'une des revendications 1 à 3, **caractérisé en ce qu'**au moins 60 % en moles, de préférence au moins 90 % en moles, des motifs structuraux appartenant au motif structural de base (I) sont obtenus par conversion de styrène.

5. Copolymère selon l'une des revendications 1 à 4, **caractérisé en ce que** R¹ et R² sont respectivement identiques ou différents et représentent indépendamment l'un de l'autre un résidu alkyle ramifié ou non ramifié, et/ou un résidu alcényle ramifié ou non ramifié, qui se présentent de préférence sous forme de résidus polyoléfine basés respectivement sur des oléfines comprenant 2 à 8 atomes de carbone.

6. Copolymère selon l'une des revendications 1 à 5, **caractérisé en ce que** R¹ et R² sont respectivement identiques ou différents et représentent indépendamment l'un de l'autre un résidu polyisobutylène et/ou un résidu polybutadiène non hydrogéné, partiellement hydrogéné et/ou totalement hydrogéné et/ou un résidu polyisoprène non hydrogéné, partiellement hydrogéné et/ou totalement hydrogéné.

7. Copolymère selon l'une des revendications 1 à 6, **caractérisé en ce que** dans l'ensemble au moins 60 % en moles, de préférence au moins 80 % en moles, des résidus se présentant sous la forme R¹ et/ou R² représentent un résidu polyisobutylène comprenant 50 à 200, de préférence 60 à 120 atomes de carbone.

8. Copolymère selon l'une des revendications 1 à 7, **caractérisé en ce que** sa structure générale en tant que telle et/ou le segment A présent en option comprennent au niveau des motifs structuraux divalents respectivement 0,1 à 10 % en moles du motif structural polaire type dérivé d'acide dicarboxylique (III).

9. Copolymère selon l'une des revendications 1 à 8, **caractérisé en ce que** sa structure générale en tant que telle et/ou le segment A présent en option comprennent au niveau des motifs structuraux divalents respectivement 1 à 10 % en moles du motif structural type groupe oxygène (IV).

10. Copolymère selon la revendication 9, **caractérisé en ce que** E² et E³ sont identiques ou différents et comprennent respectivement 4 à 300, de préférence 10 à 100 atomes oxygène d'éther.

11. Copolymère selon l'une des revendications 1 à 10, **caractérisé en ce que** sa structure générale en tant que telle et/ou le segment A présent en option comprennent au niveau des motifs structuraux divalents respectivement 1 à 10 % en moles du motif structural type groupe de tête (V).

12. Copolymère selon l'une des revendications 1 à 11, dont la structure générale comprend d'une part le segment A, et d'autre part au moins un autre segment B présentant des motifs structuraux divalents, le segment A se présentant en tant que bloc A et le segment B en tant que bloc B lié au bloc A qui se distingue du bloc A par la concentration des motifs structuraux divalents (I) à (V) et/ou le type de motifs structuraux divalents .

13. Copolymère selon l'une des revendications 1 à 11, comprenant 10 à 500, de préférence 15 à 300, motifs structuraux sélectionnés dans le groupe constitué des motifs structuraux divalents (I) à (V).

14. Préparation d'un copolymère selon l'une des revendications 1 à 13, **caractérisée en ce que**, au cours d'une étape antérieure, un précurseur de copolymère est fabriqué par polymérisation, le motif structural non polaire type dérivé d'acide dicarboxylique (II), et éventuellement le motif structural type groupe oxygène (IV) et/ou le motif structural type groupe de tête (V), étant ensuite respectivement formés au cours d'une étape ultérieure par des réactions de greffage.

15. Préparation selon la revendication 14, **caractérisée en ce que** le précurseur de copolymère a un poids moléculaire moyen en nombre compris entre 600 et 25 000 g/mole, de préférence entre 800 et 10 000 g/mole, et de façon particulièrement préférée entre 1 000 et 5 000 g/mole.

16. Composition pouvant être obtenue en mélangeant au moins deux composants qui se présentent respectivement sous une forme liquide à la température de mélange, dans laquelle on utilise en tant que troisième composant stabilisateur 0,1 à 10 % en poids, par rapport au poids total de la composition, d'un copolymère selon l'une des revendications 1 à 13 en tant qu'agent de transfert de phase.

17. Composition selon la revendication 16, qui se présente sous la forme d'une émulsion et qui contient 0,1 à 10 % en poids d'un copolymère selon l'une des revendications 1 à 13, 0,1 à 50 % en poids d'un homo- ou d'un copolymère de butadiène, et 10 à 70 % en poids d'une résine polymère insaturée en éthylène, qui peut être dissoute dans un diluant réactif insaturé en éthylène, la fraction des motifs structuraux butadiène dans le copolymère de butadiène étant de préférence d'au moins 33, de façon particulièrement préférée d'au moins 50 % en moles, et la résine polymère insaturée en éthylène se présentant de préférence sous la forme d'un polyester insaturé ou d'un ester de vinyle insaturé, qui se présentent respectivement de préférence sous forme dissoute dans le styrène.

18. Dispersion qui contient un agent de dispersion et un solide particulaire dispersé qui se présente de préférence sous la forme d'une charge inorganique et/ou sous la forme d'un pigment organique ou inorganique et/ou sous la forme de nanotubes de carbone et/ou sous la forme de graphènes, dans laquelle on utilise, par rapport au poids total de la dispersion, 0,1 à 10 % en poids d'un copolymère selon l'une des revendications 1 à 13 comme agent mouillant et dispersant.

19. Utilisation d'un copolymère selon l'une des revendications 1 à 13 en tant qu'agent de transfert de phase, auxiliaire dégazeur ou agent mouillant et dispersant.
